# EUROPÄISCHE PATENTSCHRIFT

(11) **EP 0 559 726 B1**
(45) Veröffentlichungstag und Bekanntmachung des Hinweises auf die Patenterteilung: **06.09.1995**
(21) Anmeldenummer: 92900262.4
(22) Anmeldetag: 02.12.1991
(51) Int. Cl.: H02H 6/00, H02H 7/085

(54) **VERFAHREN UND VORRICHTUNG ZUR ERMITTLUNG DER BELASTUNG UND/ODER DER BELASTBARKEIT ELEKTRONISCH GEREGELTER BAUTEILE ODER BAUGRUPPEN**
PROCESS AND DEVICE FOR FINDING THE LOAD AND/OR LOADABILITY OF ELECTRONICALLY CONTROLLED COMPONENTS OR GROUPS OF COMPONENTS
PROCEDE ET DISPOSITIF DE DETERMINATION DE LA SOLLICITATION ET/OU DE LA RESISTANCE A LA SOLLICITATION DE COMPOSANTS OU DE GROUPES DE COMPOSANTS A REGLAGE ELECTRONIQUE

(30) Priorität: 30.11.1990 DE 4038198
(43) Veröffentlichungstag der Anmeldung: 15.09.1993
(73) Patentinhaber: Brose Fahrzeugteile GmbH & Co. KG, 96450 Coburg (DE)
(72) Erfinder: BECKER, Herbert, D-8630 Coburg (DE); WAGNER, Klaus, D-8621 Gleu en (DE); JÜRJENS, Gerhard, D-8630 Coburg (DE); ELIASSON, Anders, S-415 19 Göteborg (SE); MAGNUSSON, Lars, S-413 21 Göteborg (SE); HÖGBERG, Bo, S-440 06 Grabo (SE); KESSLER, Michael, D-6050 Offenbach (DE); RUSS, Detlef, D-6300 Ilmenau (DE); STROBEL, Ulrich, D-8630 Coburg (DE)
(74) Vertreter: Ninnemann, Detlef, Dipl.-Ing.
(86) Internationale Anmeldenummer: DE9100943
(87) Internationale Veröffentlichungsnummer: WO9210017

(56) Entgegenhaltungen:
- EP-A- 0 329 926
- DE-A- 3 107 123
- GB-A- 2 223 636
- US-A- 3 693 047
- US-A- 4 721 894

## Beschreibung

Die Erfindung bezieht sich auf ein Verfahren zur Ermittlung der Belastung und/oder der Belastbarkeit elektronisch geregelter Bauteile oder Baugruppen gemäß dem Oberbegriff des Anspruchs 1 sowie auf eine Vorrichtung zur Durchführung des Verfahrens. Ein solches Verfahren und eine solche Vorrichtung sind aus der US-A- 4 721 894 bekannt.

Zur Erfassung der momentanen Temperatur elektrischer oder elektronischer Bauteile oder Baugruppen ist es bekannt, Temperatursensoren, beispielsweise Thermistoren, oder Thermoschalter an den elektrischen oder elektronischen Bauteilen oder Baugruppen bzw. in deren unmittelbarer Nähe zu montieren, um die Temperatur an wichtigen Stellen zu überwachen und bei Überschreiten eines vorgegebenen Temperaturwertes zum Überlastschutz bzw. zur Strombegrenzung die Stromversorgung direkt oder indirekt zu unterbrechen.

Bei einer derartigen Temperaturerfassung und -überwachung müssen die einzelnen Sensorkomponenten montiert und verkabelt werden, was insbesondere dann zu erheblichen Problemen führt, wenn die zu überwachenden Bauteile nur schwer zugänglich sind und ein geringer Platz zur Unterbringung der Temperaturerfassungselemente vorhanden ist. Ein Beispiel für eine schwer zugängliche Stelle zur Überwachung der Temperatur ist die Wicklung eines Elektromotors, um die Wicklungstemperatur des Elektromotors zu erfassen und damit eine Überlastung des Elektromotors zu vermeiden.

Bekannte Vorrichtungen zur Temperaturregelung eines Elektromotors, die einen Überlastschutz bzw. eine Strombegrenzung bewirken, weisen einen Meßwiderstand auf, der vom Motor- bzw. Laststrom durchflossen wird, und dessen Spannungsabfall einer Auswerteschaltung zugeführt wird. Bei Überschreiten eines vorbestimmten Grenzwertes wird die Stromzufuhr zum Motor reduziert oder unterbrochen. Bei diesen bekannten Überlastschutzschaltungen wird zwar eine Information über den Belastungszustand des Elektromotors durch Erfassen des Motorstromes geliefert, nicht aber über den Erwärmungszustand, der letztlich für einen wirksamen Überlastschutz von Bedeutung ist.

Aus der DE-PS 38 04 679 ist eine Vorrichtung zur Temperaturregelung eines Elektromotors bekannt, die einen Temperaturfühler sowie einen dem Elektromotor vorgeschalteten, auf einem Kühlkörper montierten Halbleiterschalter aufweist, die in thermischer Wirkverbindung im Kühlluftstrom des Motors angeordnet sind. Die Vorrichtung weist eine Phasenanschnittsteuerung auf, die den Stromflußwinkel für den Elektromotor bei zunehmender Temperatur zurücknimmt.

Der Temperaturfühler der bekannten Vorrichtung ist zusammen mit dem Halbleiterschalter auf dem Kühlkörper angeordnet und die Größe, Gestaltung und/oder die Wandstärke des Kühlkörpers sind der Wärmekapazität des Elektromotors angepaßt.

Durch die Anpassung der Geometrie des Kühlkörpers an die Wärmekapazität des Elektromotors werden zwar die die thermische Zeitkonstante des Elektromotors bestimmenden statischen Größen, nämlich Wärmewiderstand und Wärmevolumen simuliert, so daß die Wärmeverhältnisse am Elektromotor weitestgehend wirklichkeitsgetreu abgebildet werden, jedoch setzt die bekannte Vorrichtung eine bestimmte Konfiguration und Anordnung des Temperaturfühlers und des Halbleiterschalters sowie des Kühlkörpers voraus, wofür ein ausreichender Platz vorhanden sein muß, um die gesamte Anordnung unterbringen zu können.

Ein weiterer Nachteil der bekannten Vorrichtung besteht darin, daß zur Simulation des Temperaturzustandes des Elektromotors eine bestimmte Konfiguration des Kühlkörpers erforderlich ist, so daß für unterschiedliche Elektromotoren unterschiedliche Kühlkörper verwendet werden müssen.

Ein weiterer Nachteil der bekannten Vorrichtung besteht darin, daß bei bestimmten Belastungsverhältnissen keine zuverlässige Voraussage über die Temperaturentwicklung am Elektromotor gemacht werden kann, so daß der Überlastschutz bereits dann wirksam wird, wenn keine unzulässige Belastung des Elektromotors auftritt oder erst dann zur Abschaltung des Elektromotors bzw. zur Reduzierung der vom Elektromotor abgegebenen Leistung führt, wenn bereits ein Überlastzustand eingetreten ist.

Zum Schutz insbesondere elektrischer Antriebsaggregate vor einer Überlastung durch Überschreiten einer vorgegebenen Strom-Zeitfläche, d.h. vor einer Überlastung durch Überschreiten einer vorgebbaren Betriebsdauer bei einer bestimmten Stromaufnahme und damit durch ein zu starkes Erwärmen des Aggregats, sind thermische Überlastschalter bekannt, die das Aggregat bei Eintreten eines Überlastfalles abschalten, d.h. die Stromzufuhr zum Motor reduzieren oder unterbrechen und ein Wiedereinschalten erst nach Ablauf einer vorgebbaren Zeitspanne zulassen, so daß sich das Aggregat für einen erneuten Betrieb hinreichend abgekühlt hat.

Derartige thermische Überlastschalter werden zusätzlich zu Strombegrenzungsschaltungen eingesetzt, die das Überschreiten einer maximal zulässigen Stromaufnahme verhindern. Die thermischen Überlastschalter müssen notwendigerweise zusätzlich zu den Steuer-, Regel- und Überwachungseinrichtungen vorgesehen werden, die zur Steuerung, Regelung und zum Schutz der Aggregate ohnehin angeordnet sind.

Aufgabe der vorliegenden Erfindung ist es, ein Verfahren zur Ermittlung der Belastung und/oder Belastbarkeit elektrischer oder elektronischer Bauteile oder Baugruppen anzugeben, die über eine Leistungssteuerstufe aus einer Stromquelle gespeist werden und deren stromabhängiges kalorisches Verhalten bekannt ist, das auch ohne Anwendung separater thermischer Überlastschalter bzw. Überlastsensoren die Belastung elektrischer oder elektronischer Bauteile oder Baugruppen erfaßt und eine Überlastung der Bauteile oder Baugruppen sicher verhindert und das sich damit durch eine kostengünstige Herstellung eines Überlastschutzes bei geringem Platzbedarf auszeichnet.

Diese Aufgabe wird durch die im Kennzeichen des Anspruchs 1 aufgeführten Verfahrensschritte gelöst.

Die erfindungsgemäße Lösung ermöglicht eine einfache und sichere Erfassung der Temperatur und damit der belastung elektrischer oder elektronischer Bauteile oder Baugruppen ohne eine aufwendige Simulationsvorrichtung unter Berücksichtigung der die thermische Zeitkonstante der elektrischen oder elektronischen Bauteile bestimmenden statischen Größen wie Wärmewiderstand und Wärmevolumen, eine einfache Montage ohne wesentlichen Verkabelungsaufwand und mit einem Minimum an Erfassungselementen, deren Anordnung weitestgehend unabhängig von dem Ort ist, an dem die Temperatur zu bestimmen ist, sowie eine zuverlässige Reproduktion der Temperaturwerte in Abhängigkeit vom Belastungszustand für einen wirksamen Überlastschutz der elektrischen oder elektronischen Bauteile oder Baugruppen.

Eine vorteilhafte Ausgestaltung der erfindungsgemäßen Lösung ist dadurch gekennzeichnet, daß die Umgebungstemperatur der Bauteile oder Baugruppen kontinuierlich oder in vorgegebenen Zeitabständen erfaßt und zusammen mit den erfaßten momentanen Strom- und/oder Leistungswerten in einem Speicher abgelegt wird.

Diese Ausgestaltung der erfindungsgemäßen Lösung ermöglicht es, die mit dem Algorithmus berechneten Werte der momentanen Temperatur an dem zu überwachenden Bauteil oder den zu überwachenden Baugruppen aktualisiert wird, so daß Änderungen der Umgebungstemperatur oder bei gekapselten Bauteilen oder Baugruppen infolge eines Wärmestaus ansteigende Temperaturen erfaßt werden können.

Eine weitere vorteilhafte Ausgestaltung der erfindungsgemäßen Lösung ist dadurch gekennzeichnet, daß der Wärmestrom über die Bauteile oder Baugruppen kontinuierlich oder in vorgegebenen Zeitabständen erfaßt und zusammen mit den erfaßten momentanen Strom- und/oder Leistungswerten in einem Speicher abgelegt wird. Dabei werden die Wärmestrom-Meßwerte vorzugsweise aus der Temperaturdifferenz über eine vorgegebene Mestrecke mit bekanntem Wärmewiderstand gebildet.

Diese Ausgestaltung der erfindungsgemäßen Lösung ermöglicht es, die mittels des Algorithmus berechneten Temperaturen an den Bauteilen bzw. Baugruppen ausgehend von einem Anfangswert und unter Berücksichtigung der Belastung der betreffenden Bauteile oder Baugruppen durch aktuelle Meßwerte der Umgebungstemperatur zu berücksichtigen, wobei die Umgebungstemperatur an einer beliebigen Stelle erfaßt werden kann, die im Wärmestrom liegt, der die Bauteile oder Baugruppen miterfaßt, so daß eine unmittelbare Aussage über die Temperaturen an den Bauteilen oder Baugruppen gemacht werden kann.

Die Bildung der Wärmestrom-Meßwerte aus der Temperaturdifferenz über eine vorgegebene Meßstrecke mit bekanntem Wärmewiderstand ermöglicht es, die Wärmestrom-Meßwerte in einfacher Weise mit geringerem schaltungstechnischen Aufwand zu erfassen.

Eine weitere vorteilhafte Ausgestaltung der erfindungsgemäßen Lösung ist dadurch gekennzeichnet, daß bei Übereinstimmung eines ersten vorgegebenen Temperatur-Grenzwertes mit einem berechneten, momentanen Temperaturwert die von der Leistungssteuerstufe abgegebene Leistung reduziert wird.

Dies ermöglicht die Aufrechterhaltung eines Betriebs der betreffenden Bauteile oder Baugruppen bei reduzierter Leistung, so daß bereits in einem Stadium, wo eine Überlastung der Bauteile oder Baugruppen noch nicht einsetzt, die Leistung reduziert werden kann und damit ein unterbrechungsfreier Betrieb wenn auch bei reduzierter Leistung gewährleistet ist.

Der vorgegebene Temperatur-Grenzwert kann dabei so gelegt werden, daß hinreichende Sicherheit besteht, daß bei reduzierter Leistung ein Überlastfall vermieden wird, wobei der ursprünglich gespeicherte Anfangstemperaturwert sowie die Berücksichtigung der die thermische Zeitkonstante der Bauteile oder Baugruppen bestimmenden statischen Größen wie Wärmewiderstand und Wärmevolumen und die mittels des Algorithmus zu bewerkstelligende Extrapolation der Temperaturwerte an den Bauteilen oder Baugruppen eine sichere Gewähr dafür bieten, daß der Überlastfall nicht eintritt.

Eine weitere vorteilhafte Ausgestaltung der erfindungsgemäßen Lösung ist dadurch gekennzeichnet, daß eine Tabelle oder Funktion berechneter momentaner Temperaturwerte in Abhängigkeit von der Einschaltdauer der Leistungssteuerstufe und den berechneten momentanen Temperaturwerten gespeichert wird und bei Übereinstimmung der Werte die Leistungssteuerstufe die übertragene Leistung abgestuft reduziert.

Diese Weiterbildung der erfindungsgemäßen Lösung ermöglicht es, beispielsweise aus zwei vorgegebenen Temperaturwerten und unter Berücksichtigung der Zeit, die zwischen dem Erreichen des ersten Temperaturwertes bis zum Erreichen des zweiten, höheren Temperaturwertes vergeht, die Steigerung der Temperaturkurve am Bauteil bzw. an der zu überwachenen Baugruppe zu ermitteln und geeignete Manahmen zur Leistungsreduzierung durchzuführen, damit ein hinreichender Sicherheitsabstand zum Überlastfall eingehalten wird.

In gleicher Weise kann eine Temperatur-Grenzwertkurve vorgegeben werden, die vom Mikroprozessor mit den fortlaufend berechneten momentanen Temperaturwerten verglichen wird, so daß eine Vorausschau getroffen werden kann, wann bei gleichen Lastverhältnissen die Temperatur-Grenzwertkurve erreicht wird. Durch abgestuftes Reduzieren der Leistung kann dabei vermieden werden, daß der Überlastfall an dem am meisten gefährdeten Bauteil oder der am meisten gefährdeten Baugruppe auftritt, wobei ein gewünschter Sicherheitsabstand von der Temperatur-Grenzwertkurve eingehalten werden kann.

Eine weitere vorteilhafte Ausgestaltung des erfindungsgemäßen Verfahrens ist dadurch gekennzeichnet, daß das Abkühlverhalten der elektrischen oder elektronischen Bauteile oder Baugruppen über der Zeit erfaßt und mittels der nach einem Betrieb oder nach einem Betrieb mit reduzierter Leistung der elektrischen oder elektronischen Bauteile oder Baugruppen abgelaufenen Zeit der momentanen Temperatur mittels eines Algorithmus errechnet und gespeichert wird.

Durch die Ermittlung des Abkühlverhaltens der elektrischen oder elektronischen Bauteile oder Baugruppen kann unter Berücksichtigung der nach einem Betrieb oder einem Betrieb mit reduzierter Leistung abgelaufenen Zeit unter Verwendung eines Algorithmus die jeweilige Temperatur ermittelt und in einem Speicher abgelegt werden. Die Erfassung des Abkühlverhaltens der elektrischen oder elektronischen Bauteile oder Baugruppen erfolgt dabei vorzugsweise unter den Bedingungen des Einbauortes, d.h. unter Berücksichtigung eines möglichen Wärmestaus bzw. des am Einbauort gegebenen Wärmeableitstromes.

Zur Korrektur und Angleichung der rechnerisch ermittelten Werte der Temperatur der elektrischen oder elektronischen Bauteile oder Baugruppen kann dabei eine Vergleichsmessung der Temperatur in der Nähe des Einbauortes durchgeführt werden und unter Berücksichtigung der Verhältnisse am Einbauort und am Ort der Temperaturmessung ein Korrekturwert eingefügt werden.

Das erfindungsgemäße Verfahren ermöglicht eine fortlaufende Ermittlung der Belastung bzw. Belastbarkeit elektronisch geregelter elektrischer bzw. elektronischer Bauteile oder Baugruppen, ohne daß separate thermische Überlastschalter bzw. Überlastsensoren vorgesehen sind, so daß ein sicherer Schutz der Bauteile bzw. Baugruppen vor einer Überlastung gewährleistet ist.

Infolge des durch die Anwendung des erfindungsgemäßen Verfahrens möglichen Verzichts auf getrennte thermische Überlastschalter bzw. Überlastsensoren wird eine kostengünstige Lösung für eine Überlast-Schutzschaltung geschaffen, die wegen der Nutzbarmachung ohnehin für die Steuerung bzw. Regelung der Bauteile bzw. Baugruppen notwendiger Sensoren einen minimalen baulichen Aufwand aufweist. Die Festlegung eines Belastungsspielraums in Abhängigkeit von der jeweiligen Belastung der Bauteile oder Baugruppen schafft eine erhöhte Systemverfügbarkeit sowie vergrößerte Sicherheit für den Benutzer, da hinreichende Reserven bei der Bemessung des Belastungsspielraumes vorgesehen werden können.

Die erfindungsgemäße Lösung eignet sich insbesondere zur Anwendung bei elektrisch betriebenen und elektronisch geregelten Antriebseinheiten in der Kraftfahrzeugtechnik, da es hier in besonderem Maße auf kostengünstige Lösungen, geringen Platzbedarf sowie eine hohe Systemverfügbarkeit und Benutzer-Sicherheit ankommt. Das erfindungsgemäße Verfahren kann im Bereich der Kraftfahrzeugtechnik sowohl für elektrische Verstellsysteme von Sitzen, Fensterhebern und sonstigen Karosserieteilen als auch zum Schutz elektrischer Antriebsaggregate eines Elektrofahrzeugs angewendet werden. Neben einer Anwendung in der Kraftfahrzeugtechnik ist jedoch auch eine Anwendung für all jene elektrisch betriebenen Antriebseinheiten denkbar, deren Betriebssicherheit aufgrund der Betriebsbedingungen durch eine thermische Überlastung gefährdet ist.

Der Festlegung des Belastungsspielraums sowohl in der Ausgangslage als auch nach einer Temperaturreferenzmessung nach Beendigung der Belastung der Bauteile oder Baugruppen wird vorzugsweise eine konstante Temperaturänderung bei gleichbleibender Änderung der den Bauteilen oder Baugruppen zugeführten elektrischen Leistung zugrundegelegt.

Diese Regel zur Bestimmung der Belastung bzw. Belastbarkeit geht von der Annahme einer proportionalen Änderung der Temperatur mit der Belastungszeit, d.h. mit einer konstant anwachsenden Temperatur-Zeitfläche aus. Obwohl dieses Verfahren einen ungünstigen Erwärmungsfall annimmt und damit bei gleichbleibender Leistungszufuhr zu einem frühzeitigen Erreichen eines vorgegebenen oberen Grenzwertes der Belastbarkeit führt, erweist es sich bei der Anwendung besonders sicherheitsrelevanter Schaltungen als besonders vorteilhaft, da auch bei Erreichen des vorgegebenen oberen BelastungsGrenzwertes noch hinreichende Sicherheitsreserven vorhanden sind, die eine darüber hinausgehende Betätigung der Bauteile bzw. Baugruppen ermöglichen, um einen den Sicherheitsanforderungen genügenden Zustand anzunehmen.

Beipielsweise kann bei Anwendung der erfindungsgemäßen Lösung auf eine elektrisch betriebene und elektronisch geregelte Antriebseinheit für ein elektrisches Verstellsystem von Sitzen oder Fensterhebern in Kraftfahrzeugen auch bei Erreichen des oberen Belastungs-Grenzwertes bei gleichzeitigem Auftreten eines sicherheitsrelevanten Zustandes, beispielsweise eines Einklemmzustandes, ein weiteres Verstellen der Antriebseinheit in Richtung auf eine Freigabe eingeklemmter Gegenstände oder Personen erfolgen, ohne daß die elektrische Antriebseinheit infolge Überlastung beschädigt und damit funktionsunfähig wird.

Bei einem Ansprechen von Sicherheitseinrichtungen innerhalb des Temperaturbereiches zwischen dem oberen und einem für ein Wiedereinschalten der Bauteile oder Baugruppen relevanten unteren Temperatur-Grenzwert wird die Betätigung der Bauteile oder Baugruppen freigegeben, so daß in diesem Temperaturbereich Sicherheitsmaßnahmen wie beispielsweise ein Umkehrlauf bei einer Antriebseinheit zur Freigabe bei drohender Einklemmgefahr unabhängig vom Belastungszustand der Bauteile bzw. Baugruppen, insbesondere von Antriebseinheiten erfolgen kann. Da die Ermittlung des Belastungszustandes der betreffenden Bauteile oder Baugruppen ohnehin stets zur sicheren Seite hin erfolgt, ist eine solche Freigabe für Sicherungsmaßnahmen ohne weiteres möglich, da wegen der hinreichenden Sicherheitsreserven nicht die Gefahr einer Funktionsstörung bzw. Zerstörung der betreffenden Bauteile oder Baugruppen besteht.

Der Festlegung des Belastungsspielraumes kann aber auch alternativ eine variable Temperaturänderung bei gleichbleibender Änderung der den Bauteilen oder Baugruppen zugeführten elektrischen Leistung zugrundegelegt werden, wenn beispielsweise aufgrund der Bauart der Bauteile oder Baugruppen, deren Betriebsbedingungen, Umgebungstemperatur und/oder durch ergänzende Sicherheitsmaßnahmen eine hinreichende Sicherheitsreserve gewährleistet ist.

Bei einer Anwendung des erfindungsgemäßen Verfahrens auf elektrische Antriebseinheiten kann vorzugsweise ein zur Drehzahlbestimmung der elektrischen Antriebseinheit verwendeter Hallsensor zur Temperaturreferenzmessung herangezogen werden. Vorzugsweise weist der Hallsensor ein lineares oder linearisiertes Temperatur-Strom-Verhalten auf, so daß ein proportionaler Zusammenhang zwischen der Temperatur und dem Strom besteht und damit mittels einer Strommessung, d.h. des Versorgungsstroms oder des Ausgangsstroms des Hallsensors auf die Temperatur des Hallsensors geschlossen werden kann.

Alternativ oder in Ergänzung hierzu kann die Temperaturreferenzmessung durch Messung des Ankerwicklungsstromes einer elektrischen Antriebseinheit erfolgen.

Eine weitere Möglichkeit zur Temperaturreferenzmessung besteht in der Verwendung eines temperaturabhänigen, spannungsgesteuerten Oszillators bzw. ggf. in der Verwendung eines separaten Temperaturfühlers.

Eine weitere Variante der erfindungsgemäßen Lösung zur Ermittlung der Belastung und/oder der Belastbarkeit elektronisch geregelter Bauteile oder Baugruppen, die über eine Leistungssteuerstufe aus einer Stromquelle gespeist werden und deren stromabhängiges kalorisches Verhalten bekannt ist, mit einem in der äußeren Umgebung der Bauteile oder Baugruppen angeordneten, vom Bauteile- oder Baugruppenstrom durchflossenen Bauelement, wobei das elektrische Verhalten des Bauelements oder eine von ihm abgegebene elektrische Kenngröße eine Funktion der Bauelementtemperatur ist, ist dadurch gekennzeichnet, daß
a) die Temperatur des Bauelements bestimmt und unter Berücksichtigung des kalorischen Verhaltens der Bauteile oder Baugruppen und eines vorgegebenen oberen Temperaturgrenzwertes der Belastungsspielraum der Bauteile oder Baugruppen ermittelt wird,
b) für ein vorgegebenes Zeitintervall der Zeitpunkt und die umgesetzte Leistung eines oder mehrerer Belastungsintervalle der Bauteile oder Baugruppen gespeichert wird,
c) zu Beginn jeder Belastungsphase der Bauteile oder Baugruppen innerhalb des vorgegebenen Zeitintervalls
   c1) die Temperatur des Bauelements erfaßt wird und
   c2) der noch zur Verfügung stehende Belastungsspielraum aus der Differenz des nach dem Verfahrensschritt a) bestimmten Wertes und der umgesetzten Leistung der Belastungsintervalle bestimmt wird, wobei
   c3) der verbleibende Belastungsspielraum um einen Korrekturwert erhöht oder verringert wird, der sich aus der Abweichung der Temperatur zum Zeitpunkt der wiederholten Aktivierung und der Temperatur zum Zeitpunkt der ersten Aktivierung der Bauteile oder Baugruppen innerhalb des vorgegebenen Zeitintervalls ergibt,
d) nach einer Belastungspause, die größer als das vorgegebene Zeitintervall ist, der Belastungsspielraum erneut nach dem Verfahrensschritt a) bestimmt wird und
e) nach erfolgter Deaktivierung der Bauteile oder Baugruppen infolge des Erreichens bzw. Überschreitens des oberen Temperaturgrenzwertes eine erneute Belastung erst nach Unterschreiten eines vorgegebenen unteren Temperaturgrenzwertes freigegeben wird.

Da in vielen Anwendungsfällen die Erfassung der Temperatur unmittelbar an den zu überwachenden Bauteilen oder Baugruppen problematisch ist, eine Temperaturerfassung an peripheren Bauelementen, deren Erwärmung repräsentativ für die Belastung der zu überwachenden Bauteile oder Baugruppen ist, häufig aber ohne weiteres möglich ist, erweist es sich als vorteilhaft, die Belastung dieser leicht zugänglichen Bauelemente zu überwachen und daraus auf die Belastung der zu überwachenden Bauteile oder Baugruppen zu schließen.

Dies erfolgt vorzugsweise in der Weise, daß mit Belastungsbeginn die Temperatur des Bauelements erfaßt und daraus der Belastungsspielraum der zu überwachenden Bauteile oder Baugruppen ermittelt wird und daß ein festes Zeitintervall vorgegeben wird, in dem die Belastungs- und Ruhezyklen erfaßt werden, daß zu Beginn jeder Aktivierung der Bauteile oder Baugruppen die Temperatur des Bauelements erfaßt wird und mit diesem Wert die Ausgangstemperatur korrigiert wird und daß nach Ablauf des vorgegebenen Zeitintervalls und nicht erfolgter Belastung der Bauteile oder Baugruppen eine neue Ausgangstemperatur sowie Ermittlung des Belastungsspielraums der Bauteile oder Baugruppen erfaßt werden.

Wird innerhalb eines vorgegebenen Zeitintervalls der ermittelte Belastungsspielraum ausgeschöpft, d.h. die vorgegebene obere Temperaturgrenze erreicht, so kann eine erneute Belastung der Bauteile oder Baugruppen erst nach Unterschreiten eines vorgegebenen unteren Temperaturgrenzwertes erfolgen.

Diese Ausgestaltung der erfindungsgemäßen Lösung ermöglicht es nicht nur, ein peripheres Bauelement zur Belastungsermittlung der zu überwachenden Bauteile oder Baugruppen heranzuziehen, sondern berücksichtigt auch den Wechsel von Belastungen und Ruhepausen der zu überwachenden Bauteile oder Baugruppen im üblichen Betrieb aber auch in extremen Betriebssituationen, beispielsweise bei sehr hohen oder sehr niedrigen Außentemperaturen und ungewöhnlichen Belastungszyklen, zu denen auch ein eventueller Dauerbetrieb gehört.

Auch im Falle einer Deaktivierung der zu überwachenden Bauteile oder Baugruppen infolge Erreichens des oberen Temperaturgrenzwertes, d.h. Überschreitens des ermittelten Belastungsspielraumes, kann mittels einer der Leistungssteuerstufe für die zu überwachenden Bauteile oder Baugruppen übergeordnete Steuer-, Regel- und/oder Überwachungseinrichtung die Betriebsbereitschaft der Bauteile oder Baugruppen aufrechterhalten werden, wenn dies beispielsweise aufgrund einer Notsituation erforderlich ist.

Die Entscheidung über die Aufrechterhaltung der Betriebsbereitschaft der zu überwachenden Bauteile oder Baugruppen kann nach einem vorgegebenen Algorithmus erfolgen, der die Belastungsgrenzen und bestimmte Notfallprioritäten berücksichtigt. Eine Notbetätigung nach erfolgter Deaktivierung der Bauteile oder Baugruppen kann ebenfalls über einen mit einem Betätigungsglied verbundenen Notschalter oder manuell durch den Benutzer erfolgen. Diese Notbetätigung sollte vorzugsweise zeitlich oder in ihrer Leistung begrenzt sein, d.h. die Sicherheitsreserve zwischen Überschreiten des vorgegebenen Belastungsspielraums und der Grenzbelastung der zu überwachenden Bauteile oder Baugruppen berücksichtigen.

Eine vorteilhafte Ausgestaltung dieser erfindungsgemäßen Variante besteht darin, daß bei leistungsbegrenzter Notbetätigung die maximale Leistungsdichte der elektronisch geregelten Bauteile oder Baugruppen herabgesetzt wird. Vorzugsweise sollte die Notbetätigung eine Aktivierung der Bauteile oder Baugruppen ausschließlich in einer vorgegebenen Betriebsart zulassen, beispielsweise im Falle einer Antriebseinheit eine Drehrichtung zur Öffnung eines Betätigungsgliedes, um Einklemmsituationen zu verhindern bzw. zu beseitigen.

Vorteilhafterweise kann dem Benutzer der jeweils verbleibende Belastungsspielraum zu überwachender Bauteile oder Baugruppen optisch oder akustisch angezeigt werden, wobei vorzugsweise bei Überschreiten einer vorgegebenen Grenze des verbleibenden Belastungsspielraums ein Warnsignal abgegeben wird. Diese Warnfunktion kann in der Weise erfolgen, daß bei einer Vielzahl von zu überwachender Bauteile oder Baugruppen die Signalabgabe mit der Betätigung des betreffenden Bauteils oder der betreffenden Baugruppe erfolgt, so daß der Benutzer darauf hingewiesen wird, daß eine fortdauernde Belastung dieser Bauteile oder Baugruppen zu einer Deaktivierung führt.

Das Bauelement kann vorzugsweise aus einem in der Leistungssteuerstufe der zu überwachenden Bauteile oder Baugruppen angeordneten Bauelement bestehen, beispielsweise einem Halbleiterbauelement, wie Transistor oder Thyristor bzw. Diode oder einem Relais, mit deren Hilfe die Versorgungsspannung der Bauteile oder Baugruppen gesteuert wird.

Eine Vorrichtung zur Durchführung des erfindungsgemäßen Verfahrens ist dadurch gekennzeichnet, daß unmittelbar mit den elektrischen oder elektronischen Bauteilen oder Baugruppen und/oder in der Umgebung der elektrischen oder elektronischen Bauteile oder Baugruppen ein Temperaturfühler angeordnet und mit einem Mikroprozessor verbunden ist, daß die den Strom und/oder die Leistung der elektrischen oder elektronischen Bauteile oder Baugruppen bestimmende Leistungssteuerstufe über Ansteuerleitungen und Sensor- leitungen mit dem Mikroprozessor verbunden ist, und daß der Mikroprozessor mit einem Algorithmus geladen ist, mit dem aus der in einem mit dem Mikroprozessor verbundenen Speicher (RAM, ROM) gespeicherten Wärmeleitfähigkeit und thermischen Masse der elektrischen oder elektronischen Bauteile oder Baugruppen, mindestens einem Temperatur-Ausgangswert, der mit dem Einschalten der Leistungssteuerstufe erfaßt wurde, und den momentanen Strom und/oder Leistungswerten, die an oder mittels der Leistungssteuerstufe erfaßt werden, der momentane Temperaturwert ermittelt wird.

Anhand eines in der Zeichnung dargestellten Ausführungsbeispieles mit verschiedenen Diagrammen soll der der Erfindung zugrundeliegende Gedanke näher erläutert werden.

Es zeigen:
- Figur 1: eine schematische Darstellung eines Elektromotors für einen elektrischen Fensterheber in Kraftfahrzeugen;
- Figur 2: ein Blockschaltbild der Ansteuerelektronik für einen Elektromotor gemäß Figur 1;
- Figur 3: ein Temperatur-Zeit-Diagramm für ein belastetes Bauteil bzw. eine belastete Baugruppe, insbesondere für eine Antriebseinheit;
- Figur 4: ein Temperatur-Zeit-Diagramm eines zur Temperaturmessung verwendeten Sensors;
- Figur 5: ein Strom-Zeit-Diagramm einer mit konstanten Stromblöcken belasteten Antriebseinheit;
- Figur 6: ein schematisches Blockschaltbild einer Vorrichtung zur Ermittlung des Belastungsspielraumes von zu überwachenden Bauteilen oder Baugruppen mit einem peripheren Bauelement und
- Figur 7: ein Temperatur-Zeit-Diagramm zur Erläuterung des Verfahrens zur Ermittlung des Belastungsspielraumes mit vorgegebenen Zeitintervallen

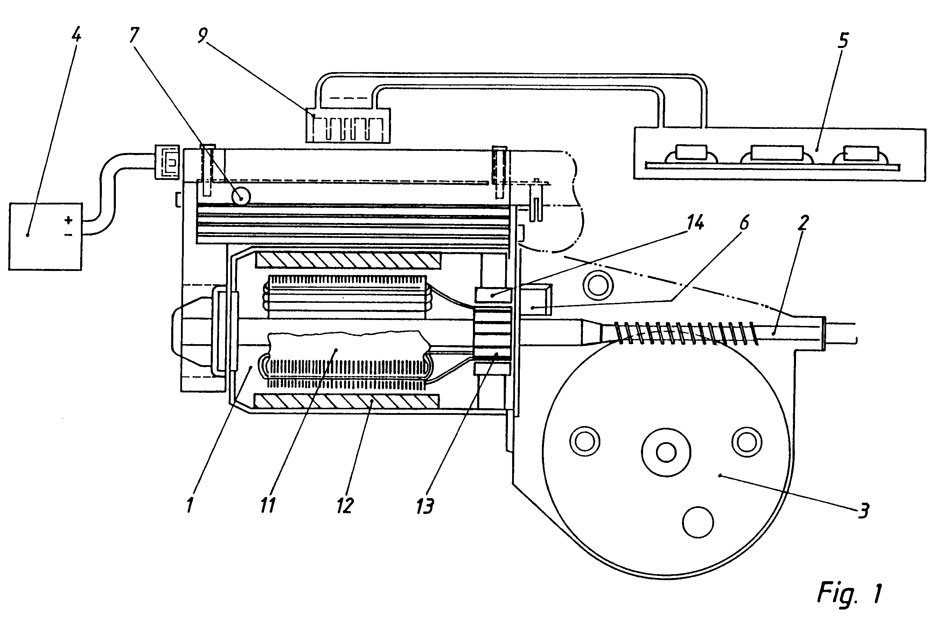

Figur 1 zeigt einen Elektromotor 1, der einen Rotor 11 aufweist, der über eine Motorwelle mit einem Schneckengewinde 2 zum Antrieb eines Schneckenrades 3 verbunden ist. Das Schneckenrad 3 kann in an sich bekannter Weise Teil eines Getriebes für einen elektrischen Fensterheber oder dergleichen sein.

Im Motorgehäuse des Elektromotors 1 befinden sich weiterhin der Stator 12 und ein Kommutator 13 mit einem Bürstenhalter 14. Die Spannungsversorgung des Elektromotors 1 erfolgt aus einer Batterie oder einem Akkumulator 4 gesteuert von einer Leistungssteuerstufe und Ansteuerelektronik 5 über eine Steckerverbindung 9. Die Leistungsteuerstufe und Ansteuerelektronik 5 kann in nicht näher dargestellter Weise mit einer Schalteinrichtung verbunden sein, an der von einem Benutzer die verschiedenen Betriebszustände bzw. Betriebsarten des Elektromotors 1 einstellbar sind.

Wie die Prinzipdarstellung gemäß Figur 1 zeigt, ist es bei der gekapselten Bauart des Elektromotors 1, der zudem noch an häufig unzugänglichen Stellen eingebaut ist, äußerst schwierig, geeignete Sensoren vorzusehen, die eine exakte und zuverlässige Aussage über den Belastungszustand des Elektromotors 1 machen können. Üblicherweise ist der Ort größter Erwärmung des Elektromotors 1 der Bereich des Rotors 11 mit der Rotorwicklung, die über eine Isolierplatte vom Kommutator 13 getrennt ist.

Ein weiteres wesentliches Problem beim Einbau an sic bekannter Sensoren wie Thermistoren oder Thermoschalter besteht darin, daß diese Sensoren ebenfalls erheblichen Belastungen ausgesetzt sind, so daß die Gefahr besteht, daß bei einem klemmenden Thermoschalter trotz Erreichens einer Grenztemperatur des Elektromotors 1 ein ständiges Wiedereinschalten des Elektromotors 1 bis zu dessen Zerstörung erfolgt.

Ein weiteres wesentliches Problem besteht darin, die betreffenden Sensoren auf einen großen Temperaturbereich einzustellen, wie er beispielsweise bei Kraftfahrzeugen mit Temperaturen mit minus 40 C° bis plus 50 C° gegeben ist.

Um eine zuverlässige und reproduzierbare Aussage über den Belastungszustand des als Beispiel für ein elektrisches bzw. elektronisches Bauteil dienenden Elektromotors 1 gemäß Figur 1 zu machen, wird gemäß der vorliegenden Erfindung ausgehend von einem Ausgangstemperaturwert und vom vorangegangenen Belastungszustand des Elektromotors 1 die momentane Temperatur an neuralgischen Stellen des Elektromotors 1 mittels eines Algorithmus berechnet, der die spezifischen Größen des Elektromotors 1 wie Wärmewiderstand bzw. Wärmeleitfähigkeit und Wärmevolumen berücksichtigt.

Da über die Leistungssteuerstufe und Ansteuerelektronik 5 die Ansteuerung des Elektromotors 1 erfolgt und in Abhängigkeit von der Belastung des Elektromotors 1 zur Erzielung einer konstanten Drehzahl an der Motorwelle bzw. zum Erreichen einer vorgegebenen Stellung das Produkt aus Motorstrom, Motorspannung und Zeitdauer die Belastung des Elektromotors 1 repräsentiert, kann ausgehend von einem Anfangstemperaturwert und unter Berücksichtigung der Motorleistung bzw. Motorarbeit sowie unter Berücksichtigung der motorspezifischen Größen die momentane Temperatur mittels einer geeigneten Elektronik bestimmt werden.

Dabei ist es nicht erforderlich, daß ein Temperaturfühler zur Bestimmung des Anfangstemperaturwertes am Ort größter Wärmeerzeugung im Elektromotor eingebaut wird sondern an einer leichter zugänglichen Stelle, wenn sichergestellt ist, daß eine feste Proportionalität zwischen dem Einbauort des Temperaturfühlers und einer beliebigen Stelle des Elektromotors besteht, an der der momentane Temperaturwert bestimmt werden soll. So wäre zwar der Einbau eines Temperaturfühlers unmittelbar im Bereich der Motorwicklung wünschenswert, dabei handelt es sich jedoch um eine sehr schwer zugängliche Stelle, an der zudem die Gefahr einer Beschädigung eines Temperaturfühlers besteht.

Eine geeignete Stelle zur Anordnung eines Temperaturfühlers ist aber beispielsweise der Bürstenhalter 14, der jedoch durch eine thermische Wand von der Motorwicklung getrennt ist.

Eine weitere mögliche Anordnung eines Temperaturfühlers ist die Anordnung eines Fühlers 7 am Motorgehäuse, was jedoch voraussetzt, daß eine hinreichende Wärmeübertragung zum Motorgehäuse gegeben ist.

Schließlich besteht die Möglichkeit, einen Temperaturfühler mit einem Hallsensor 6 zur Drehzahlerfassung und Lagebestimmung der Motorwelle zu verbinden, wenn gleichzeitig sichergestellt werden kann, daß das Verhalten des Hallsensors eine lineare Abhängigkeit von der Temperatur besitzt.

Die Verbindung des jeweiligen Temperaturfühlers mit der Leistungssteuerstufe und Ansteuerelektronik 5 erfolgt über die Steckverbindung 9. Gleichzeitig kann der jeweilige Temperaturfühler zur Korrektur bzw. zum Nachführen des errechneten momentanen Temperaturwertes verwendet werden, indem in bestimmten Zeitabständen oder kontinuierlich ein Vergleich zwischen dem errechneten Momentanwert und dem gemessenen Temperaturwert erfolgt und der Einbauort des Temperaturfühlers bei diesem Vergleich berücksichtigt wird.

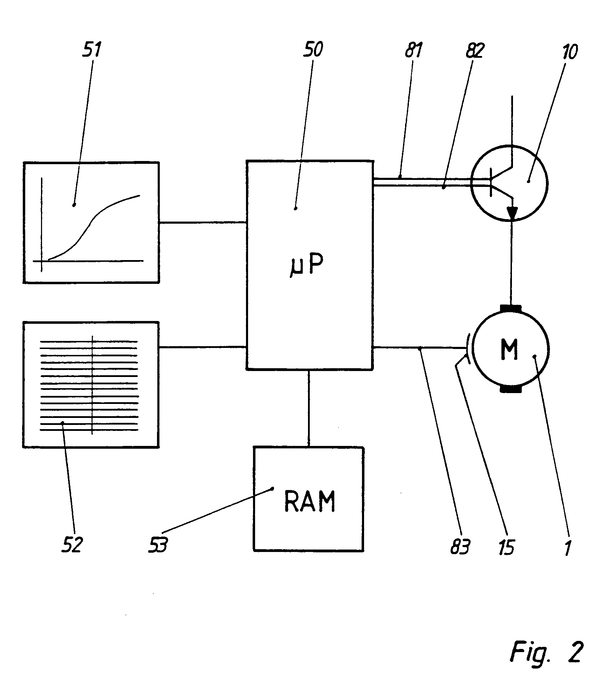

Figur 2 zeigt in einem Blockschaltbild eine mögliche Ausführungsform der Ansteuerelektronik, die gleichzeitig zur Temperaturüberwachung eines elektrischen oder elektronischen Bauteils, in dem vorliegendenen Fall eines Elektromotors, eingesetzt wird.

Die Ansteuerelektronik besteht aus einem Mikroprozessor oder Mikrocontroller 50, der mit einem ersten Speicher 51 und/oder einen Tabellenspeicher 52 verbunden ist. Zusätzlich ist der Mikroprozessor 50 mit einem Speicher mit wahlfreiem Zugriff 53 verbunden, in dem momentane Temperaturwerte, die aus einem Algorithmus berechnet werden, abgelegt werden.

Der Mikroprozessor 50 ist weiterhin mit einer Leistungssteuerstufe 10 verbunden, die symbolisch als Transistor dargestellt ist und üblicherweise aus einer Halbleiterbrückenanordnung mit bipolaren Leistungstransistoren oder Feldeffekttransistoren besteht. Die Ansteuerung der Leistungssteuerstufe 10 erfolgt über eine Steuerleitung 81, während im vorliegenden Ausführungsbeispiel eine Stromerfassung in der Leistungssteuerstufe 10 über eine Leitung 82 erfolgt.

Zusätzlich ist der Mikroprozessor 50 über eine Leitung 83 mit einem Temperaturfühler 15 verbunden, der an einer beliebigen Stelle eines Elektromotors 1 angeordnet ist.

Der erste Speicher 51 bzw. Tabellenspeicher 52 beinhaltet gespeicherte Werte für die wärmespezifischen Eigenschaften des Elektromotors 1, nämlich den Wärmewiderstand und die Wärmekapazität sowie die bekannte, aus Meßwerten erfaßte Verknüpfung der Mewerte des Thermofühlers 15 mit den Temperaturwerten an bestimmten Stellen des Elektromotors 1.

Vor der Inbetriebnahme des Elektromotors 1 wird über die Temperaturfühler 15 die momentane Temperatur am Einbauort des Temperaturfühlers 15 erfaßt und vom Mikroprozessor 50 im Speicher mit wahlfreiem Zugriff 53 abgelegt. In Abhängigkeit von der Betriebsart und Belastung des Elektromotors 1 wird die über die Leitung 82 erfaßte Leistung bzw. der Strom über die Leistungssteuerstufe 10 vom Mikroprozessor erfaßt und der momentane Temperaturwert aus den im Tabellenspeicher 52 bzw. ersten Speicher 51 abgelegten Werten berechnet und der jeweilige Temperaturwert kontinuierlich oder in vorgegebenen Zeitabständen im Speicher 53 abgelegt.

Zusätzlich können weitere, mittels des Temperaturfühlers 15 oder mittels eines im Umgebungsbereich des Elektromotors 1 angeordneten Temperaturfühlers erfaßte Temperaturwerte abgespeichert werden. Der im Mikroprozessor 50 gespeicherte Algorithmus berechnet mit den gespeicherten konstanten Werten sowie der über die Leistungssteuerstufe 10 am Elektromotor 1 abgegebenen Leistung und ggf. den momentanen Temperaturwerten in der Umgebung des Elektromotors 1 die momentane Temperatur an einer oder mehreren vorgegebenen Stellen im Elektromotor 1, die vorzugsweise erhöhter Belastung ausgesetzt sind.

Durch einen zusätzlichen Vergleich der errechneten momentanen Temperatur mit einer Grenzwertkurve für die zulässige Temperatur unter Berücksichtigung der Belastungsart als Parameter kann eine Vorausschau über die weitere Temperaturentwicklung an einer beliebigen Stelle im Elektromotor 1 getroffen werden, so daß der Mikroprozessor 50 als Teil der Ansteuerelektronik bereits vor Erreichen einer Grenzwerttemperatur die Leistung reduzieren kann, so daß ein fortgesetzter Betrieb bei reduzierter Leistung ermöglicht und damit ein Abschalten des Elektromotors 1 verhindert wird.

Anstelle eines festen Temperaturwertes aus der Umgebung des Elektromotors 1 kann ein Meßwert für den Wärmestrom eingesetzt werden, der aus der Temperaturdifferenz über eine bekannte Meßstrecke gebildet wird. Diese Meßstrecke kann aus einem Bauteil bestehen, dessen Wärmewiderstand bzw. Wärmeleitfähigkeit bekannt ist, so daß aus dem Strom über diese bekannte Mestrecke auf den Wärmestrom geschlossen werden kann.

Nach Beendigung des Betriebes des Elektromotors 1 oder bei Fortführung des Betriebs des Elektromotors 1 mit reduzierter Leistung kann der Abkühlvorgang ebenfalls vom Mikroprozessor 50 und mittels eines eingegebenen Algorithmus überwacht und aus der Messung der Temperatur in der Umgebung des Elektromotors 1 eine definitive Aussage über die Temperatur an einer oder mehreren unterschiedlichen, beliebigen Stellen im Elektromotor 1 gemacht werden.

Der im Mikroprozessor oder Mikrocontroller 50 gespeicherte Algorithmus berücksichtigt dabei ebenfalls die Wärmeleitfähigkeit sowie die Wärmemasse und ermittelt bei reduzierter Stromzufuhr zum Elektromotor 1 bzw. bei abgeschalteter Stromzufuhr das Maß der Abkühlung bzw. die momentane Temperatur an einer beliebigen, ausgewählten Stelle des Elektromotors 1.

Anstelle eines zusätzlichen Temperaturfühlers in der Umgebung des Elektromotors 1 kann auch die Leistungssteuerstufe zur Ermittlung der Temperatur aus der Umgebung des Elektromotors 1 eingesetzt werden. Dies kann entweder in enger thermischer Kopplung mit dem Elektromotor 1 oder durch Kopplung über einen zusätzlichen Algorithmus, d.h. "rechnerisch" erfolgen, indem das Wärmeverhalten der Leistungssteuerstufe in Relation zum Wärmeverhalten des Elektromotors 1 gesetzt wird.

Bei enger thermischer Kopplung zwischen Leistungssteuerstufe 10 und Elektromotor 1 wird die Proportionalität bei der Erwärmung zwischen Elektromotor 1 und Leistungssteuerstufe ausgenutzt, so daß über das thermische Verhalten der Leistungssteuerstufe auf den Erwärmungsgrad in der unmittelbaren Umgebung bzw. am Gehäuse des Elektromotors 1 geschlossen wird.

Bei einer mathematischen Kopplung zwischen Leistungssteuerstufe 10 und Elektromotor 1 wird der Erwärmungsgrad der Leistungssteuerstufe in Abhängigkeit von der übertragenen Leistung zur Ermittlung der Temperatur des Elektromotors 1 herangezogen und über einen vorgegebenen Algorithmus die Wärmebelastung des Elektromotors 1 bestimmt.

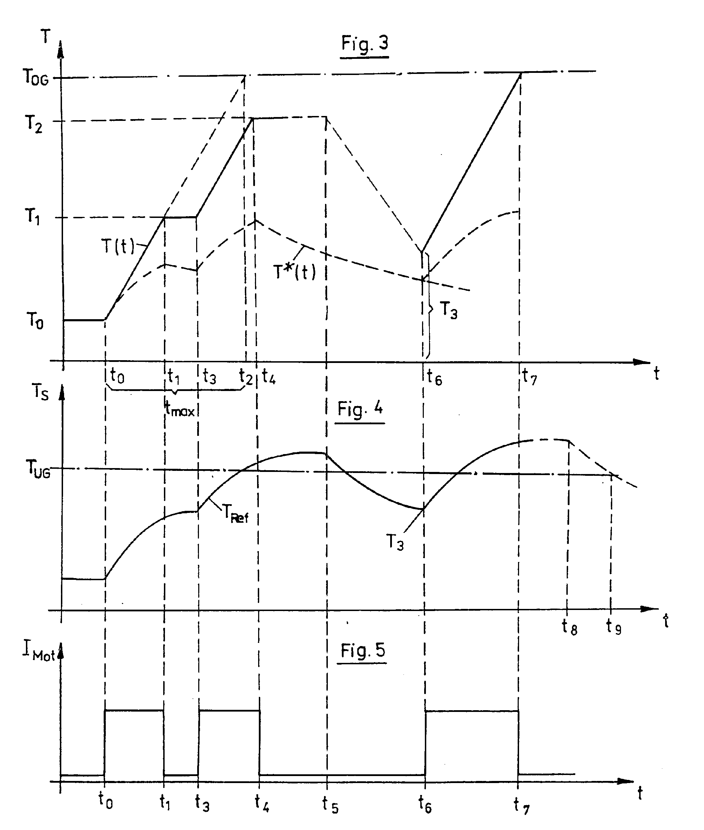

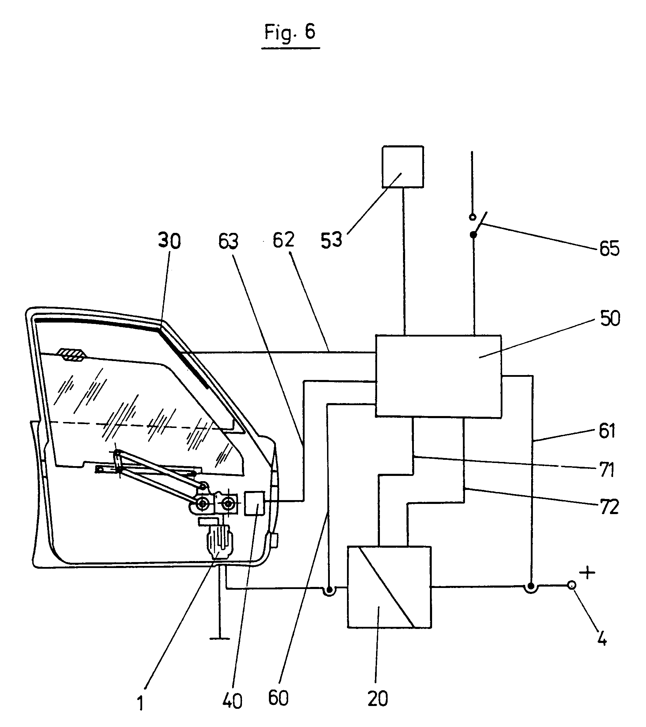

In den Figuren 3 bis 5 ist ein typischer Belastungsfall für eine elektronisch geregelte Antriebseinheit dargestellt, die über eine Leistungssteuerstufe aus einer Stromquelle gespeist wird. Dabei zeigt Figur 5 den Stromfluß zur elektrischen Antriebseinheit über der Zeit, wobei die elektrische Antriebseinheit mit Stromblöcken beaufschlagt wird, zwischen denen Betriebspausen bestehen. Der Betrieb der elektrischen Antriebseinheit führt zu einer in Figur 3 dargestellten Temperaturerhöhung, die im vereinfachten Fall als linear zeitabhängige Größe angenommen wird.

Der lineare Anstieg der Temperatur T in Abhängigkeit von der Betriebsdauer t würde gemäß Figur 3 ausgehend von einem Einschaltzeitpunkt t₀ zum Zeitpunkt t₂ zu einem Schnitt der Temperaturkurve T (t) mit einem oberen Temperatur-Grenzwert T_{OG} führen, d.h. bei einem ununterbrochenen Betrieb der elektrischen Antriebseinheit würde in einer Zeitspanne tₘₐₓ der obere Temperatur-Grenzwert erreicht sein, der zum Abschalten der elektrischen Antriebseinheit führen würde.

Bei einer Betriebsunterbrechung zum Zeitpunkt t₁ wird ein Verharren der Betriebstemperatur beim Wert T₁ angenommen, bis zum Zeitpunkt t₃ die elektrische Antriebseinheit erneut betätigt wird, wobei die Betätigungsdauer bis zum Zeitpunkt t₄ erfolgt, so daß der Stromblock gemäß Figur 5 einen weiteren linearen Anstieg der Temperatur der elektrischen Antriebseinheit bis zum Wert T₂ bewirkt. Nach einer erneuten Betriebspause bis zum Zeitpunkt t₆ wird die elektrische Antriebseinheit bis zum Zeitpunkt t₇ betätigt.

Figur 4 zeigt den Verlauf der Sensortemperatur bzw. Temperaturreferenzmessung T_{Ref}(t) über der Zeit, wobei der Kurvenverlauf mehreren aneinandergesetzten logarithmischen bzw. Exponentialfunktionen entspricht.

Das erfindungsgemäße Verfahren ermöglicht nun eine Abbildung oder Simulation des Belastungszustandes der im Ausführungsbeispiel angenommenen elektrischen Antriebseinheit unter Zuhilfenahme von für die elektronische Regelung der elektrischen Antriebseinheit erforderlichen Sensoren nach folgender Maßgabe.

Zunächst wird das kalorische Verhalten der zu überwachenden Bauteile bzw. Baugruppen, im vorliegenden Fall also der elektrischen Antriebseinheit, berechnet, wobei unter kalorischem Verhalten die Erwärmung und Abkühlung der betreffenden Bauteile bzw. Baugruppen in Abhängigkeit von der Leistungszufuhr bzw. Unterbrechnungsdauer der Leistungszufuhr unter Berücksichtigung der thermischen Masse und Wärmeleitfähigkeit der betreffenden Bauteile bzw. Baugruppen verstanden wird.

Vor der Stromzufuhr zu den Bauteilen oder Baugruppen zum Zeitpunkt t₀ wird der Ausgangswert T₀ der Temperatur, d.h. die aktuelle Umgebungstemperatur der Antriebseinheit gemessen. Das kalorische Verhalten der elektrischen Antriebseinheit bestimmt nun die Steigung der angenommenen linearisierten Abhängigkeit der Erwärmung der elektrischen Antriebseinheit von der Betriebsdauer, so daß die maximale Betriebsdauer tₘₐₓ für eine ununterbrochene Betriebsdauer und damit der Belastungsspielraum bei der Inbetriebnahme der elektrischen Antriebseinheit ermittelt werden kann.

Auf das in Figur 3 dargestellte Diagramm übertragen bedeutet dies, daß der Belastungsspielraum die Differenz zwischen dem oberen Temperatur-Grenzwert T_{OG} und dem Ausgangswert T₀ der Temperatur beträgt.

Vom Zeitpunkt t₁ an wird die Leistungszufuhr zu der elektrischen Antriebseinheit bis zum Zeitpunkt t₃ unterbrochen, so daß die Temperatur der elektrischen Antriebseinheit entsprechend dem angenommenen Algorithmus nicht weiter ansteigt und damit auf dem Wert T₁ verharrt. Nach Beendigung der Belastung der elektrischen Antriebseinheit zum Zeitpunkt t₁ wird eine fortlaufende Temperaturreferenzmessung T_{Ref} durchgeführt, die gemäß Figur 4 ein flacheres exponentielles bzw. logarithmisches Ansteigen der Referenztemperatur auch nach Unterbrechen der Leistungszufuhr zu der elektrischen Antriebseinheit egenüber dem Belastungszustand aufweist.

Zum Zeitpunkt t₃ erfolgt erneut eine Leistungszufuhr zur elektrischen Antriebseinheit, was einen weiteren linearen Anstieg der Temperaturkurve T (t) der elektrischen Antriebseinheit zur Folge hat, wobei auch die Sensortemperatur für die Temperaturreferenzmessung nach einer exponentiellen bzw. logarithmischen Funktion ansteigt.

Zum Zeitpunkt t₄ wird die Belastung der elektrischen Antriebseinheit durch Unterbrechung der Leistungszufuhr beendet, so daß gemäß Figur 3 die Temperaturkurve T (t) der elektrischen Antriebseinheit beim Temperaturwert T₂ verharrt, während die Temperaturreferenzmessung des verwendeten Sensors zu einem weiteren exponentiellen bzw. logarithmischen Ansteigen der Sensortemperatur gemäß Figur 4 führt.

Zunächst erfolgt keine weitere Leistungzufuhr zur elektrischen Antriebseinheit und die Temperaturkurve des verwendeten Sensors steigt gemäß Figur 4 bis zum Zeitpunkt t₅ an, d.h. bis zu diesem Zeitpunkt t₅ ist ein vollständiger Temperaturausgleich zur Antriebseinheit erfolgt. Während der gesamten Betriebsdauer vom Zeitpunkt t₀ bis zum Zeitpunkt t₅ des fortlaufenden exponentiellen Anstiegs der gemessenen Referenztemperatur wird der Belastungsspielraum durch den Ausgangswert T₀ der Temperatur vor der Stromzufuhr zu der elektrischen Antriebseinheit, die Bestromungsdauer der elektrischen Antriebseinheit und den vorgegebenen Grenzwert T_{OG} bestimmt.

Treten bei dieser Belastung keine hinreichend langen Betriebspausen auf, die ein Abfallen der Temperaturreferenzkurve gemäß Figur 4 bewirken würden, so bestimmt ausschließlich die Betriebsdauer, die Steigung der Temperaturkurve T (t) gemäß Figur 3, das kalorische Verhalten der elektrischen Antriebseinheit und die Höhe der Leistungsaufnahme der elektrischen Antriebseinheit den Belastungsspielraum. Dadurch kann der Betrieb der elektrischen Antriebseinheit bei jeweils nur kurzer Betriebsunterbrechnung nur soweit fortgesetzt werden, bis unter Berücksichtigung der Betriebspausen die linear ansteigende Temperaturkurve T (t) den oberen Grenzwert T_{OG} erreicht, was zu einem Abschalten der elektrischen Antriebseinheit führen würde.

Aufgrund einer hinreichend langen Betriebspause beginnend mit dem Zeitpunkt t₄ wird zum Zeitpunkt t₅ die Steigung der Sensortemperaturkurve gleich Null und fällt anschließend nach einer exponentiellen oder logarithmischen Funktion ab.

Das Sinken der am Sensor gemessenen momentanen Temperatur bedingt, daß nach dem erfindungsgemäßen Verfahren der Belastungsspielraum von diesem Zeitpunkt an von der gemessenen Referenztemperatur abhängt und damit proportional bzw. nach einer fallenden logarithmischen oder exponentiellen Funktion mit der Zeitdauer der Betriebsunterbrechung zunimmt.

Wie der Darstellung gemäß den Figuren 3 bis 5 zu entnehmen ist, tritt zum Zeitpunkt t₆ erneut ein Belastungsfall auf, der zu einem linearen Ansteigen der Temperaturkurve T (t) der Antriebseinheit sowie einem Anstieg der Referenztemperatur führt, bis zum Zeitpunkt t₇ eine Abschaltung der elektrischen Antriebseinheit erfolgt, da die Temperaturkurve T (t) den oberen Temperatur-Grenzwert T_{OG} erreicht hat.

Das Überschreiten des oberen Grenzwerts hat zur Folge, daß für eine bestimmte Zeitdauer nach dem Abschalten der elektrischen Antriebseinheit ein Wiedereinschalten unterbunden wird, da bis zum Zeitpunkt t₈ die Temperaturreferenzmessung zu einem weiteren exponentiellen Ansteigen der Sensortemperatur führt. Erst nach dem Abfallen der Referenztemperatur unter den Grenzwert T_{UG} steht wieder ein nutzbarer Belastungsspielraum zur Verfügung.

Da die Sicherheitsabschaltung bei Überschreiten des oberen Temperatur-Grenzwertes ausschließlich aus dem Algorithmus zur Bestimmung der Belastung bzw. Belastbarkeit der elektrischen Antriebeinheit erfolgt, besteht die Möglichkeit, daß im Sicherheitsfall, d.h. beispielsweise bei einer elektrischen Antriebseinheit zum Antrieb eines Fahrzeugsitzes oder eines elektrischen Fensterhebers zum Einklemmschutz, die elektrische Antriebseinheit trotz Überschreitens des oberen Grenzwertes erneut eingeschaltet wird, indem die Schaltung zur Ermittlung der Belastung der Antriebseinheit außer Kraft gesetzt und eine Sicherheitsmaßnahme, beispielsweise eine Drehrichtungsumkehr, in Gang gesetzt wird.

Nach einem weiteren Merkmal der erfindungsgemäßen Lösung wird die elektrische Antriebseinheit zur erneuten Belastung erst dann freigegeben, wenn die Temperaturreferenzmessung zu einem momentanen Temperaturwert führt, der unterhalb eines unteren Temperatur-Grenzwertes liegt. Dieser untere Temperatur-Grenzwert T_{UG} ist in der Darstellung gemäß Figur 4 zum Zeitpunkt t₉ erreicht, so daß erst von diesem Zeitpunkt an erneut eine Bestromung der elektrischen Antriebseinheit erfolgen kann.

Alternativ zur Bestimmung des Belastungsspielraumes unter Annahme eines konstanten Verhältnisses der Temperaturänderung zur Änderung der zugeführten elektrischen Leistung und damit zu einem linearen Verlauf der Temperaturkurve T (t) gemäß Figur 3, deren Steigung von dem stromabhängigen kalorischen Verhalten bestimmt wird, kann ein temperaturabhängiger variabler Anstieg des Verhältnisses der Temperaturänderung zur zugeführten elektrischen Leistung dem Algorithmus zur Bestimmung des Belastungsspielraumes zugrundegelegt werden.

Diese Verhältnisse sind unter Zugrundelegung einer exponentiellen oder logarithmischen Funktion in Figur 3 gestrichelt in Form der Temperaturkurve T*(t) bei ansonsten gleichen Belastungsverhältnissen, d.h. gleicher Einschaltdauer der elektrischen Antriebseinheit dargestellt. Wie dieser Darstellung zu entnehmen ist, wird unter Zugrundelegung eines variablen Anstiegs der Belastungsspielraum vergrößert, so daß bei gleichen Belastungsverhältnissen ein späteres Abschalten der elektrischen Antriebseinheit infolge Erreichens des oberen Temperatur-Grenzwertes erfolgt.

Das in Figur 6 dargestellte Blockschaltbild zeigt in schematisch vereinfachter Form eine elektrische Antriebseinheit 1 als zu überwachendes Bauteil bzw. zu überwachende Baugruppe, die aus einer Spannungsquelle 4 über eine Leistungssteuerstufe 20 in Form eines Relais gespeist wird. Die elektrische Antriebseinheit 1 soll in dem dargestellten Ausführungsbeispiel den Verstellmechanismus für eine elektrisch betätigte Fensterscheibe antreiben.

Die Steuerung und Überwachung der elektrischen Antriebseinheit 1 sowie der verschiedenen Betätigungsglieder erfolgt mittels einer Steuer-, Regel- und Überwachungsschaltung 50 in Form eines Mikroprozessors oder Mikrocontrollers, der mit einem Speicher mit wahlfreiem Zugriff 53 verbunden ist. Zusätzlich überwacht der Mikroprozessor oder Mikrocontroller 50 die an der Spannungsquelle 4 anliegende Spannung über eine Leitung 61 sowie über eine Leitung 71 die Temperatur der Leistungssteuerstufe 20, die hier im dargestellten Ausführungsbeispiel repräsentativ für das temperaturempfindliche Bauelement sein soll.

Die Ansteuerung der Leistungssteuerstufe 20 erfolgt über eine Leitung 72.

Der Belastungsstrom der elektrischen Antriebseinheit 1 wird über eine Leitung 60 erfaßt, während über Leitungen 62, 63 eine Verbindung zu Sensoren 30, 40 hergestellt wird, die die Verstellglieder des Fensterhebemechanismus überwachen bzw. als Notabschaltsensoren zum Erfassen von Einklemmzuständen dienen.

Schließlich ist der Mikroprozessor oder Mikrocontroller 50 noch mit einem Schalter 65 verbunden, mit dem manuell ein Betrieb der elektrischen Antriebseinheit 1 bewirkt werden kann, auch wenn nach Ausschöpfen des Belastungsspielraumes eine Deaktivierung der elektrischen Antriebseinheit eingetreten ist.

Die Erfassung der Temperatur des Bauelements bzw. der Leistungssteuerstufe 20 über den Sensor 71 kann auf mannigfaltige Weise erfolgen. Neben einer reinen Temperaturmessung kann beispielsweise eine Widerstandsmessung vorgesehen werden, aus der auf die Temperatur des Bauelements 20 geschlossen werden kann.

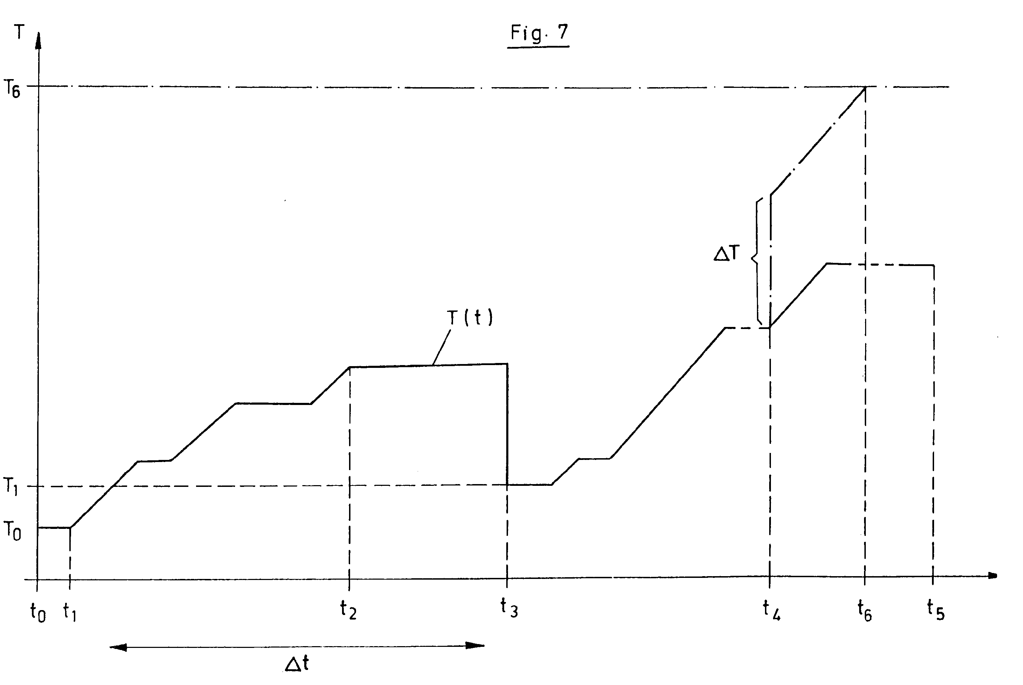

Nachstehend soll das erfindungsgemäAe Verfahren zur Ermittlung des Belastungsspielraumes der zu überwachenden Bauteile oder Baugruppen, beispielsweise der elektrischen Antriebseinheit 1 gemäß Figur 6, anhand des Temperatur-Zeit-Diagramms gemäA Figur 7 näher erläutert werden.

In dem Diagramm gemäß Figur 7 wird vereinfachend von einer linearen Abhängigkeit der Bauelement- bzw. Bauteiletemperatur von der Belastungszeit ausgegangen, wobei zur Einhaltung hinreichender Sicherheitsabstände von einer Belastungsgrenze der zu überwachenden Bauteile oder Baugruppen die Steigung der Temperatur-Zeit-Kurve unter Berücksichtigung des kalorischen Verhaltens der zu überwachenden Bauteile oder Baugruppen so bestimmt werden kann, daß der ermittelte Belastungsspielraum bei jedem Belastungszyklus den ungünstigsten Fall berücksichtigt.

Der Zeitpunkt t₀ gemäß Figur 7 stellt einen beliebig herausgegriffenen Zeitpunkt im Betrieb eines zu überwachenden Bauteils oder einer zu überwachenden Baugruppe, beispielsweise der elektrischen Antriebseinheit 1 gemäß Figur 6 dar und bildet gleichzeitig den Ausgangszeitpunkt eines vorgegebenen Zeitintervalls Delta t, das mit konstanter Länge auf der Zeitachse kontinuierlich mit der Zeit wandert.

Zum Zeitpunkt t₀ befindet sich die elektrische Antriebseinheit 1 im Ruhezustand und wird erst zum Zeitpunkt t₁ aktiviert, d.h. durch einen äußeren Schaltbefehl in Betrieb gesetzt und damit thermisch belastet. Zum Zeitpunkt der Belastung wird die Temperatur der die elektrische Antriebseinheit 1 gemäß Figur 6 ansteuernden Leistungsteuerstufe 20 erfaßt und möge T₀ betragen. Aus der erfaßten Temperatur T₀ und einer vorgegebenen Grenztemperatur T_{G} kann der Belastungsspielraum unter Berücksichtigung des kalorischen Verhaltens der elektrischen Antriebseinheit 1 ermittelt werden, der in Temperaturgeraden ausgedrückt (T_{G} - T₀) beträgt.

Durch abwechselnde Belastungs- und Ruhephasen der elektrischen Antriebseinheit 1 wird der Belastungsspielraum vermindert, wobei vereinfacht ausgedrückt der jeweils verbleibende Belastungsspielraum der Differenz der Temperatur T (t) zum oberen Temperatur-Grenzwert T_{G} ist.

Wie der Darstellung gemäß Figur 7 zu entnehmen ist, verringert sich der Belastungsspielraum kontinuierlich in jeder Belastungsphase der elektrischen Antriebseinheit bzw. verharrt in den Belastungspausen auf einem vorgegebenen Wert. Treten also innerhalb des vorgegebenen Zeitintervalls Delta t Belastungen der elektrischen Antriebseinheit auf, so reduziert sich der Belastungsspielraum bis hin zum oberen Temperatur-Grenzwert T_{G}, mit dessen Überschreitung die elektrische Antriebseinheit auch bei einer von der Bedienungsperson gewünschten Betätigung deaktiviert wird.

Nur für den Fall einer Notbetätigung entweder durch Aktivieren eines gesonderten Schalters seitens der Bedienungsperson oder durch Ansprechen eines Notbetätigungssensors wird die Deaktivierung der elektrischen Antriebseinheit außer Kraft gesetzt und wahlweise unter Leistungsbegrenzung, Zeitbegrenzung und/oder Richtungsbegrenzung ein Notbetrieb eingeleitet, der Notsituationen beseitigen soll. Eine solche Notsituation kann beispielsweise bei der Gefahr des Einklemmens eines Gegenstandes oder von Personen gegeben sein, woraufhin die elektrische Antriebseinheit in eine Richtung betrieben wird, die eine Freigabe des eingeklemmten Gegenstandes bzw. der eingeklemmten Person bewirkt.

Erfolgt nach dem Zeitpunkt t₂ keine weitere Betätigung der elektrischen Antriebseinheit über die Zeitdauer des vorgegebenen Zeitintervall, d.h. über die Zeitdauer Delta t, so wird das gesamte Überwachungssystem zurückgesetzt, d.h. mit dem erneuten Betätigen der elektrischen Antriebseinheit zum Zeitpunkt t₃ wird die Umgebungstemperatur gemessen, die im dargestellten Fall beispielsweise mit T₁ größer ist als die Ausgangstemperatur T₀ des vorangegangenen Zeitintervalls.

Im darauffolgenden Zeitintervall, dessen Ausgangstemperatur mit der Temperatur T₁ beginnt, wiederholt sich der Betriebsablauf wie vorstehend dargestellt.

Mit verschiedenen Belastungs-Ruhezustands-Zyklen vermindert sich der Belastungsspielraum bis beispielsweise zum Zeitpunkt t₅ nach einer entsprechend langen Betriebsunterbrechung wieder der Ausgangszustand hergestellt wird, indem im darauffolgenden Zeitintervall erneut die Temperatur des Bauelements, im vorliegenden Fall gemäß Figur 6 der Leistungssteuerstufe 20 bestimmt wird.

Zu Beginn jeder Belastungsphase wird eine Korrelation zwischen der ursprünglich herrschenden Ausgangstemperatur und der zu Beginn der Belastungsphase herrschenden Temperatur an dem für die Temperaturüberwachung herangezogenen Bauelement hergestellt. Tritt beipielsweise ein Temperatursprung Delta T gegenüber der Ausgangstemperatur zum Zeitpunkt t₄ innerhalb eines vorgegebenen Zeitintervalls auf, so wird eine entsprechende Korrektur durchgeführt, die in der Darstellung gemäß Figur 7 dazu führt, daß die Temperatur-Zeit-Kurve T (t) einen Sprung um diesen Temperaturbereich macht und damit bei gleicher Belastung wie zuvor angenommen zum Zeitpunkt t₆ die obere Belastungsgrenze erreicht, was zur Deaktivierung der elektrischen Antriebseinheit 1 gemäß Figur 6 führt.

Nach Überschreiten des Belastungsspielraums, d.h. nach Überschreiten der oberen Temperaturgrenze T_{G} bleibt die elektrische Antriebseinheit mit der Ausnahme des Notbetriebes solange deaktiviert, bis bei Abgabe eines erneuten Betätigungsbefehls seitens einer Bedienungsperson die an dem Bauelement erfaßte Temperatur einen unteren Grenzwert unterschritten hat, so daß ein hinreichend größer Belastungsspielraum für ein erneutes Betätigen der elektrischen Antriebseinheit besteht.

Diese zusätzliche Sperre soll verhindern, daß nach Eintreten eines Deaktivierungszustandes bei erneuter Betätigung der elektrischen Betriebseinheit unverzüglich darauf sofort ein erneutes Deaktivierung der elektrischen Antriebseinheit erfolgt. Nur bei einem hinreichend großen Belastungsspielraum wird die erneute Betätigung freigegeben, so daß beispielsweise auf den Fall eines elektrischen Fensterhebers angewendet ein vollständiger Fensterhub möglich ist.

## Patentansprüche

1. Verfahren zur Ermittlung der Belastung und/oder der Belastbarkeit elektrischer oder elektronischer Bauteile oder Baugruppen (1), die über eine Leistungssteuerstufe (5) aus einer Spannungsquelle (4) gespeist werden und deren stromabhängiges kalorisches Verhalten bekannt ist, wobei der durch die Leistungssteuerstufe (5) fließende Strom und/oder die Leistung erfaßt und gespeichert werden,
**dadurch gekennzeichnet**,
daß zumindest ein Anfangswert der Temperatur an den Bauteilen oder Baugruppen (1) oder in der Umgebung der Bauteile oder Baugruppen (1) und die Wärmeleitfähigkeit und die Wärmekapazität der Bauteile oder Baugruppen (1) bestimmt werden und mittels eines die Wärmeleitfähigkeit und Wärmekapazität der Bauteile oder Baugruppen berücksichtigenden Algorith mus aus dem gespeicherten Temperatur-Ausgangswert und dem Strom- und/oder Leistungswert die momentane Temperatur der Bauteile oder Baugruppen (1) berechnet wird.

2. Verfahren nach Anspruch 1, **dadurch gekennzeichnet**, daß die Umgebungstemperatur und/oder der Wärmestrom der Bauteile oder Baugruppen (1) kontinuierlich oder in vorgegebenen Zeitabständen erfaßt und zusammen mit den erfaßten momentanen Strom- und/oder Leistungswerten in einem Speicher (53) abgelegt wird.

3. Verfahren nach Anspruch 1 oder 2, **dadurch gekennzeichnet**, daß bei Übereinstimmung eines ersten vorgegebenen Temperatur-Grenzwertes mit einem berechneten momentanen Temperaturwert die von der Leistungssteuerstufe (5; 10) abgegebene Leistung reduziert wird und daß eine in einem Tabellenspeicher (52) oder Funktionsspeicher (51) abgelegte Tabelle oder Funktion berechneter momentaner Temperaturwerte in Abhängigkeit von der Einschaltdauer der Leistungssteuerstufe (5; 10) und dem berechneten momentanen Temperaturwert gespeichert und bei Übereinstimmung der Werte die Leistungssteuerstufe (5; 10) die übertragene Leistung abgestuft reduziert.

4. Verfahren nach einem der vorangehenden Ansprüche, **dadurch gekennzeichnet**, daß das Abkühlverhalten der elektrischen oder elektronischen Bauteile oder Baugruppen (1) über der Zeit erfaßt und mittels der nach einem Betrieb oder einem Betrieb mit reduzierter Leistung der elektrischen oder elektronischen Bauteile oder Baugruppen (1) abgelaufenen Zeit der momentane Temperaturwert mittels eines Algorithmus errechnet und gespeichert wird.

5. Verfahren nach einem der vorangehenden Ansprüche,
**dadurch gekennzeichnet**, daß
a) vor der Stromzufuhr an die Bauteile oder Baugruppen der Ausgangswert (T₀) der Temperatur gemessen und unter Berücksichtigung des kalorischen Verhaltens der Belastungsspielraum ( Differenz zwischen dem Ausgangswert der Temperatur und einem vorgegebenen oberen Temperatur-Grenzwert ) der Bauteile oder Baugruppen ermittelt wird,
b) nach Beendigung der Belastung der Bauteile oder Baugruppen eine Temperaturreferenzmessung (T_{Ref}) so lange durchgeführt wird, bis die gemessene momentane Temperatur sinkt,
c) die Stromzufuhr zu den Bauteilen oder Baugruppen durch den gemäß Verfahrensschritt a) ermittelten Belastungsspielraum so lange bestimmt wird wie die Temperaturreferenzmessung (T_{Ref}) gemäß Verfahrensschritt b) nicht abgeschlossen ist,
d) nach Abschluß der Temperaturreferenzmessung (T_{Ref}) gemäß Verfahrensschritt b) der Belastungsspielraum erneut festgelegt wird,
e) bei Erreichen des oberen Temperatur-Grenzwertes (T_{oG}) die Bauteile oder Baugruppen von der Stromquelle abgeschaltet werden und so lange abgeschaltet bleiben, bis die nach dem Verfahrensschritt b) durchgeführte Temperaturreferenzmessung (T_{Ref}) einen Wert unterhalb eines vorgegebenen unteren Temperatur-Grenzwertes (T_{uG}) erreicht hat.

6. Verfahren nach Anspruch 5, **dadurch gekennzeichnet**, daß der Festlegung des Belastungsspielraums eine konstante oder variable Temperaturänderung bei gleichbleibender Änderung der den Bauteilen oder Baugruppen zugeführten elektrischen Leistung zugrundegelegt wird. (Delta T / Delta Qₑₗ gleich konstant)

7. Verfahren nach Anspruch 5 oder 6 für eine elektrische Antriebseinheit, **dadurch gekennzeichnet**, daß zur Temperaturreferenzmessung (T_{Ref}) ein zur Drehzahlbestimmung verwendeter Hallsensor, vorzugsweise ein Hallsensor mit linearem Temperatur-Strom-Verhalten, ein temperaturabhängiger, wahlweise spannungsgesteuerter Oszillator (VCO) oder ein separater Temperaturfühler verwendet bzw. der Ankerwicklungsstrom gemessen wird.

8. Verfahren nach einem der vorangehenden Ansprüche 1 bis 4, **dadurch gekennzeichnet**, daß
a) ein in der äußeren Umgebung der Bauteile oder Baugruppen (1) angeordnetes, vom Bauteile- oder Baugruppenstrom durchflossenes Bauelement vorgesehen ist, dessen elektrisches Verhalten oder eine von ihm abgegebene elektrische Kenngröße eine Funktion der Bauelementtemperatur ist,
b) die Temperatur des Bauelements bestimmt und unter Berücksichtigung des kalorischen Verhaltens der Bauteile oder Baugruppen und eines vorgegebenen oberen Temperaturgrenzwertes der Belastungsspielraum der Bauteile oder Baugruppen ermittelt wird,
c) für ein vorgegebenes Zeitintervall der Zeitpunkt und die umgesetzte Leistung eines oder mehrerer fester Belastungsintervalle der Bauteile oder Baugruppen gespeichert wird,
d) zu Beginn jeder Belastungsphase der Bauteile oder Baugruppen innerhalb des vorgegebenen Zeitintervalls
d1) die Temperatur des Bauelements erfaßt wird und
d2) der noch zur Verfügung stehende Belastungsspielraum aus der Differenz des nach dem Verfahrensschritt b) bestimmten Wertes und der umgesetzten Leistung der Belastungsintervalle bestimmt wird, wobei
d3) der verbleibende Belastungsspielraum um einen Korrekturwert erhöht oder verringert wird, der sich aus der Abweichung der Temperatur zum Zeitpunkt der wiederholten Aktivierung und der Temperatur zum Zeitpunkt der ersten Aktivierung der Bauteile oder Baugruppen innerhalb des vorgegebenen Zeitintervalls ergibt,
e) nach einer Belastungspause, die größer als das vorgegebene Zeitintervall ist, der Belastungsspielraum erneut nach dem Verfahrensschritt b) bestimmt wird und
f) nach erfolgter Deaktivierung der Bauteile oder Baugruppen infolge des Erreichens bzw. Überschreitens des oberen Temperaturgrenzwertes eine erneute Belastung erst nach Unterschreiten eines vorgegebenen unteren Temperaturgrenzwertes freigegeben wird.

9. Verfahren nach einem der vorangehenden Ansprüche, **dadurch gekennzeichnet**, daß eine der Leistungssteuerstufe der elektrischen oder elektronischen Bauteile oder Baugruppen übergeordnete Steuer-, Regel- und/oder Überwachungseinrichtung die Betriebsbereitschaft der Bauteile oder Baugruppen aufrechterhält, auch wenn die Bauteile oder Baugruppen durch Überschreiten des oberen Temperaturgrenzwertes deaktiviert wurden und daß die übergeordnete Steuer-, Regel- und/oder Überwachungseinrichtung die Entscheidung über die Aufrechterhaltung der Betriebsbereitschaft der Bauteile oder Baugruppen vorzugsweise nach einem vorgegebenen Algorithmus bestimmt.

10. Verfahren nach einem der vorangehenden Ansprüche, **dadurch gekennzeichnet**, daß bei einem Ansprechen der übergeordneten Steuer-, Regel- und/oder Überwachungseinrichtung innerhalb des oberen und unteren Temperatur-Grenzwertes (T_{oG}, T_{uG}) das Verfahren zur Ermittlung der Belastung und/oder Belastbarkeit der Bauteile oder Baugruppen außer Kraft gesetzt wird.

11. Verfahren nach einem der vorangehenden Ansprüche, **dadurch gekennzeichnet**, daß nach erfolgter Deaktivierung der Bauteile oder Baugruppen eine zeitlich oder in ihrer Leistung begrenzte Notbetätigung über einen Notschalter oder manuell erfolgen kann und daß bei leistungsbegrenzter Notbetätigung vorzugsweise die maximale Leistungsdichte der elektronisch geregelten Bauteile oder Baugruppen herabgesetzt ist.

12. Verfahren nach Anspruch 10 oder 11, **dadurch gekennzeichnet**, daß die Notbetätigung eine Aktivierung der Bauteile oder Baugruppen ausschließt in einer vorgegebenen Betriebsart zuläßt.

13. Verfahren nach einem der vorangehenden Ansprüche, **dadurch gekennzeichnet**, daß der jeweils noch verbleibende Belastungsspielraum optisch oder akustisch oder funktionell (Intervallbetrieb des Bauteils oder der Baugruppe) angezeigt wird und/oder daß bei Überschreiten einer vorgegebenen Grenze des verbleibenden Belastungsspielraums ein Warnsignal abgegeben wird.

14. Vorrichtung zur Durchführung des Verfahrens nach einem der vorangehenden Ansprüche, **dadurch gekennzeichnet**, daß die Bauteile oder Baugruppen (1) über eine Leistungssteuerstufe (10, 20) mit einer Spannungsquelle (4) verbunden sind, und daß ein Mikroprozessor oder Mikrocontroller (50)
a) mit einem Strommeßsensor oder Leistungssensor (60) zur Erfassung des Belastungsstromes oder der aufgenommenen Leistung,
b) einem thermisch mit der Leistungssteuerstufe (20) verbundenen Temperatursensor und
c) einem Ausgang (30, 40), der mit den Bauteilen oder Baugruppen (1) verbunden ist.

15. Vorrichtung nach Anspruch 14, **dadurch gekennzeichnet**, daß unmittelbar mit den elektrischen oder elektronischen Bauteilen oder Baugruppen (1) und/oder in der Umgebung der elek- trischen oder elektronischen Bauteile oder Baugruppen (1) ein Temperaturfühler (15) angeordnet und mit einem Mikroprozessor (50) verbunden ist, daß die den Strom und/oder die Leistung der elektrischen oder elektronischen Bauteile oder Baugruppen (1) bestimmende Leistungssteuerstufe (5; 10) über Ansteuerleitungen und Sensorleitungen (81, 82) mit dem Mikroprozessor (50) verbunden ist, und daß der Mikroprozessor (50) mit einem Algorithmus geladen ist, mit dem aus der in einem mit dem Mikroprozessor (50) verbundenen Speicher (51, 52) gespeicherten Wärmeleitfähigkeit und thermischen Masse der elektrischen und elektronischen Bauteile oder Baugruppen (1), mindestens einem Temperatur-Ausgangswert, der mit dem Einschalten der Leistungssteuerstufe (5; 10) erfaßt wurde, und den momentanen Strom- und/oder Leistungswerten die an oder mittels der Leistungssteuerstufe (5; 10) erfaßt werden, der momentane Temperaturwert ermittelt wird.

## Claims

1. Process for detecting the load and/or load capacity of electric or electronic component parts or groups (1) which are fed from a voltage source (4) via an output control phase (5) and whose current-dependent calorific behaviour is known, wherein the current flowing through the output control phase (5) and/or the output is/are detected and stored,
characterised in that at least a starting value of the temperature on the component parts or groups (1) or in the vicinity of the component parts or groups (1) and the heat conductivity and heat capacity of the component parts or groups (1) are determined and the momentary temperature of the component parts or groups (1) is calculated from the stored temperature starting value and the current and/or output value by means of an algorithm which takes into account the heat conductivity and heat capacity of the component parts or groups.

2. Process according to claim 1 characterised in that the surrounding temperature and/or the heat flow of the component parts or groups (1) is/are detected continuously or at predetermined time intervals and recorded in a memory (53) together with the detected momentary current and/or output values.

3. Process according to claim 1 or 2 characterised in that when a first predetermined temperature boundary value agrees with a calculated momentary temperature value the output from the output control phase (5;10) is reduced and that a table or function of calculated momentary temperature values recorded in a tabular memory (52) or function memory (51) in dependence on the switch-on time of the output control phase (5;10) and calculated momentary temperature value is stored and when the values agree the output control phase (5;10) reduces the transferred output in stages.

4. Process according to one of the preceding claims, characterised in that the cooling behaviour of the electric or electronic component parts or groups (1) over the time is detected and the momentary temperature value is calculated by an algorithm and stored by means of the time lapsed after an operation or an operation with reduced output of the electric or electronic component parts or groups (1).

5. Process according to one of the preceding claims, characterised in that
a) before the supply of current to the component parts or groups the starting value (T₀) of the temperature is measured and taking into account the calorific behaviour the load capacity (difference between the starting value of the temperature and a predetermined upper temperature boundary limit) of the component parts or groups is determined;
b) at the end of the loading of the component parts or groups a temperature reference measurement (T_{Ref}) is carried out until the measured momentary temperature drops;
c) the current supply to the component parts or groups is determined by the load capacity detected according to process step a) for as long as the temperature reference measurement (T_{Ref}) according to process step b) is incomplete;
d) at the end of the temperature reference measurement (T_{Ref}) according to process step (b) the load capacity is fixed anew;
e) on reaching the upper temperature boundary value (T_{oG}) the component parts or groups are switched off from the current source and remain switched off until the temperature reference measurement (T_{Ref}) carried out according to the process step b) has reached a value below a predetermined lower temperature boundary value (T_{uG}).

6. Process according to claim 5 characterised in that the determination of the load capacity is based on a constant or variable temperature change with a constant alteration of the electric output supplied to the component parts or groups. (Delta T/Delta Qₑₗ practically constant)

7. Process according to claim 5 or 6 for an electric drive unit characterised in that a Hall sensor used for determining speed, preferably a Hall sensor with linear temperature-current characteristics, a temperature-dependent, selectively voltage-controlled oscillator (VCO) or a separate temperature sensor is used for the temperature reference measurement (T_{Ref}) and/or the armature winding current is measured.

8. Process according to one of the preceding claims 1 to 4 characterised in that
a) a structural element is provided which is mounted in the outer vicinity of the component parts or groups (1) and through which flows the current of the component parts or groups, whereby the electrical behaviour of this structural element or an electrical characteristic value released from same is a function of the structural element temperature;
b) the temperature of the structural element is determined and the load capacity of the component parts or groups is detected taking into account the calorific behaviour of the component parts or groups and a predetermined upper temperature boundary value;
c) for a predetermined time interval the time point and converted output of one or more fixed load intervals of the component parts or groups is stored;
d) at the beginning of each loading phase of the component parts or groups within the predetermined time interval
d1) the temperature of the structural element is detected and
d2) the load capacity still available is determined from the difference of the value determined according to process step b) and the converted output of the load interval, wherein
d3) the remaining load capacity is increased or reduced by a correction value which is produced from the deviation of the temperature at the time of the repeated activation and that of the temperature at the time of the first activation of the component parts or groups within the preset time interval;
e) after a load pause which is greater than the predetermined time interval the load capacity is determined again according to process step b) and
f) after deactivation of the component parts or groups as a result of reaching or exceeding the upper temperature boundary limit a new load is only released after understepping a predetermined lower temperature boundary value.

9. Process according to one of the preceding claims characterised in that a control, regulator and/or monitoring device taking precedence over the output control phase of the electric or electronic component parts or groups keeps the component parts or groups ready for operation even if the component parts or groups were deactivated by exceeding the upper temperature boundary value, and that the superimposed control, regulator and/or monitoring device determines the decision about maintaining the operational readiness of the component parts or groups preferably according to a predetermined algorithm.

10. Process according to one of the preceding claims, characterised in that in the event of a response of the superimposed control, regulator and/or monitoring device within the upper and lower temperature boundary limit (T_{oG}, T_{uG}) the process for detecting the load and/or load capacity of the component parts or groups is cancelled.

11. Process according to one of the preceding claims, characterised in that when deactivation of the component parts or groups has taken place a time or output-restricted emergency operation can take place through an emergency switch or manually and that with an output-restricted emergency operation preferably the maximum output density of the electronically regulated component parts or groups is reduced.

12. Process according to claim 10 or 11 characterised in that the emergency operation allows an activation of the component parts or groups only in a predetermined operational way.

13. Process according to one of the preceding claims, characterised in that the load capacity still remaining each time is indicated optically or acoustically or functionally (interval operation of the component part or group) and/or that on exceeding a predetermined boundary of the remaining load capacity a warning signal is released.

14. Apparatus for carrying out the process according to one of the preceding claims, characterised in that the component parts or groups (1) are connected by an output control phase (10, 20) to a voltage source (4) and that a micro processor or micro controller (50) is connected
a) with a current measuring sensor or output sensor (60) for determining the load current or output received,
b) a temperature sensor connected thermally with the output control phase (20) and
c) an output (30, 40) which is connected with the component parts or groups (1).

15. Apparatus according to claim 14 characterised in that a temperature sensor (15) is mounted directly with the electric or electronic component parts or groups (1) and or in the vicinity of the electrical or electronic components parts or groups (1) and is connected to a micro processor (50), that the output control phase (5;10) determining the current and/or the output of the electric or electronic component parts or groups (1) is connected by response leads and sensor leads (81,82) to the micro processor (50), and that the micro processor (50) is loaded with an algorithm with which, from the heat conductivity and thermal mass of the electrical and electronic components or groups (1) stored in a memory (51,52) connected with the microprocessor (50), at least one temperature output value is detected which will be sensed with the switching on of the output control phase (5;10), and the instantaneous current and/or output values which are produced by or by way of the output control phase (5:10) and produce the instantaneous temperature value.

## Revendications

1. Procédé pour la détermination de la charge et/ou de la capacité de charge de composants ou groupes constitutifs (1) électriques ou électroniques qui sont alimentés à partir d'une source de tension (4) par l'intermédiaire d'un étage de commande de puissance (5) et dont le comportement calorique en fonction du courant est connu, dans lequel le courant qui s'écoule à travers l'étage de commande de puissance (5) et/ou la puissance sont saisis et mémorisés, caractérisé en ce qu'au moins une valeur de départ de la température des composants ou groupes constitutifs (1) ou dans l'environnement des composants ou groupes constitutifs (1) et la conductibilité thermique et la capacité thermique des composants ou des groupes constitutifs (1) sont déterminées et en ce que la température momentanée des composants ou groupes constitutifs (1) est calculée au moyen d'un algorithme, qui prend en considération la conductibilité thermique et la capacité thermique des composants ou groupes constitutifs, à partir de la valeur de départ de température mémorisée et à partir de la valeur de courant et/ou de puissance.

2. Procédé suivant la revendication 1, caractérisé en ce que la température d'environnement et/ou l'écoulement de chaleur des composants ou groupes constitutifs (1) est saisie en continu ou à des écarts de temps donnés au préalable et est déposée dans une mémoire (53) avec les valeurs de courant et/ou de puissance momentanées saisies.

3. Procédé suivant la revendication 1 ou 2, caractérisé en ce que, lors d'une coïncidence d'une première valeur limite de température prédéterminée et d'une valeur de température momentanée calculée, la puissance délivrée par l'étage de commande de puissance (5 ; 10) est réduite et en ce qu'un tableau ou une fonction, déposé dans une mémoire de tableaux (52) ou une mémoire de fonctions (51), de valeurs de température momentanées calculées est mémorisé en fonction de la durée d'enclenchement de l'étage de commande de puissance (5 ; 10) et en fonction de la valeur de température momentanée calculée et en ce que, lors d'une coïncidence des valeurs, l'étage de commande de puissance (5 ; 10) réduit par étape la puissance transmise.

4. Procédé suivant l'une des revendications précédentes, caractérisé en ce que le comportement de refroidissement des composants ou groupes constitutifs (1) électriques ou électroniques est saisi par rapport au temps et est calculé, au moyen d'un algorithme, au moyen du temps, de la valeur de température momentanée, écoulé après un fonctionnement ou après un fonctionnement à puissance réduite des composants ou groupes constitutifs (1) électriques ou électroniques et est mémorisé.

5. Procédé suivant l'une des revendications précédentes, caractérisé en ce que :
a) avant l'alimentation en courant des composants ou groupes constitutifs, la valeur de départ (T₀) de la température est mesurée et est déterminée en prenant en considération le comportement calorique de la marge de charge (différence entre la valeur de départ de la température et une valeur limite de température supérieure prédéterminée) des composants ou groupes constitutifs,
b) après la fin de la charge des composants ou groupes constitutifs, une mesure de référence de température (T_{Ref}) est exécutée jusqu'à ce que la température momentanée mesurée baisse,
c) l'alimentation en courant des composants ou groupes constitutifs par la marge de charge déterminée suivant l'étape de procédé a) est déterminée aussi longtemps que la mesure de référence de température (T_{Ref}) suivant l'étape de procédé b) n'est pas clôturée,
d) après clôture de la mesure de référence de température (T_{Ref}) suivant l'étape de procédé b), la marge de charge est à nouveau déterminée,
e) lors d'une obtention de la valeur limite de température supérieure (T_{oG}) les composants ou groupes constitutifs sont découplés de la source de courant et restent découplés jusqu'à ce que la mesure de référence de température (T_{ref}) exécutée suivant l'étape de procédé b) a atteint une valeur en dessous d'une valeur limite de température (T_{uG}) inférieure prédéterminée.

6. Procédé suivant la revendication 5, caractérisé en ce qu'une modification de température, constante ou variable, dans le cas d'une modification constante de la puissance électrique fournie aux composants ou groupes constitutifs est à la base de la détermination de la marge de charge (Delta T/Delta Qₑₗ égal une constante).

7. Procédé suivant la revendication 5 ou 6 pour un ensemble d'entraînement électrique, caractérisé en ce que pour la mesure de référence de température (T_{ref}), un détecteur à effet Hall utilisé pour la détermination de la vitesse de rotation, de préférence un détecteur à effet Hall avec un rapport linéaire entre température et courant, un oscillateur (VCO) dépendant de la température, commandé sélectivement en tension, ou un capteur de température séparé est utilisé ou bien le courant d'enroulement d'induit est mesuré.

8. Procédé suivant l'une des revendications précédentes 1 à 4, caractérisé en ce que :
a) il est prévu un élément constitutif qui est agencé dans l'environnement externe des composants ou groupes constitutifs (1), qui est traversé par le courant des composants ou groupes constitutifs et dont le comportement électrique ou un paramètre électrique délivré par lui est une fonction de la température de l'élément constitutif,
b) la température de l'élément constitutif est définie et est déterminée en prenant en considération le comportement calorique des composants ou groupes constitutifs et d'une valeur limite de température supérieure prédéterminée de la marge de charge des composants ou groupes constitutifs,
c) pour un intervalle de temps prédéterminé, le moment et la puissance transformée d'un ou de plusieurs intervalles de charge fixes des composants ou groupes constitutifs sont mémorisés,
d) au commencement de chaque phase de charge des composants ou groupes constitutifs dans l'intervalle de temps prédéterminé,
d1) la température de l'élément constitutif est
d2) la marge de charge encore disponible et résultant de la différence de la valeur déterminée suivant l'étape de procédé b) et la puissance transfor mée des intervalles de charge est déterminée,
d3) la marge de charge restante est augmentée ou diminuée d'une valeur de correction qui résulte de la déviation de la température au moment de l'activation répétée et de la température au moment de la première activation des composants ou groupes constitutifs dans l'intervalle de temps prédéterminé,
e) après une pause de charge qui est supérieure à l'intervalle de temps prédéterminé, la marge de charge est à nouveau déterminée suivant l'étape de procédé b) et
f) après qu'a eu lieu une désactivation des composants ou groupes constitutifs à la suite de l'obtention ou du dépassement vers le haut de la valeur limite de température supérieure, une nouvelle charge n'est libérée qu'après dépassement vers le bas d'une valeur limite de température inférieure prédéterminée.

9. Procédé suivant l'une des revendications précédentes, caractérisé en ce qu'un dispositif de commande, de réglage et/ou de surveillance agencé pardessus l'étage de commande de puissance des composants ou groupes constitutifs électriques ou électroniques maintient l'état en service des composants ou groupes constitutifs, également lorsque les composants ou groupes constitutifs ont été désactivés par dépassement vers le haut de la valeur limite de température supérieure, et en ce que le dispositif de commande, de réglage et/ou de surveillance agencé par-dessus détermine la décision au sujet du maintien de l'état en service des composants ou groupes constitutifs, de préférence suivant un algorithme prédéterminé.

10. Procédé suivant l'une des revendications précédentes, caractérisé en ce que lors d'une réponse du dispositif de commande, de réglage et/ou de surveillance, agencé par-dessus, entre la valeur limite de température supérieure et l'inférieure (T_{oG}, T_{uG}), le procédé de détermination de la charge et/ou de la capacité de charge des composants ou groupes constitutifs est annulé.

11. Procédé suivant l'une des revendications précédentes, caractérisé en ce qu'après qu'a eu lieu la désactivation des composants ou groupes constitutifs, un actionnement auxiliaire, limité dans le temps ou dans sa puissance, peut avoir lieu par l'intermédiaire d'un commutateur auxiliaire ou manuellement et en ce que, dans le cas d'un actionnement auxiliaire limité en puissance, de préférence la puissance volumique maximale des composants ou groupes constitutifs réglés électroniquement est diminuée.

12. Procédé suivant la revendication 10 ou 11, caractérisé en ce que l'actionnement auxiliaire permet une activation des composants ou groupes constitutifs, exclusivement dans un mode de fonctionnement prédéterminé.

13. Procédé suivant l'une des revendications précédentes, caractérisé en ce que la marge de charge respective encore restante est indiquée de façon optique ou acoustique ou fonctionnelle (fonctionnement par intervalle du composant ou du groupe constitutif) et/ou en ce que lors d'un dépassement vers le haut d'une limite prédéterminée de la marge de charge restante, un signal d'avertissement est donné.

14. Dispositif pour la mise en oeuvre du procédé suivant l'une des revendications précédentes, caractérisé en ce que les composants ou groupes constitutifs (1) sont reliés par un étage de commande de puissance (10, 20) à une source de tension (4) et en ce qu'un microprocesseur ou un microsuperviseur (50) est relié à
a) un détecteur de mesure de courant ou un détecteur de puissance (60) pour la saisie du courant de charge ou de la puissance absorbée,
b) un détecteur de température relié thermiquement à l'étage de commande de puissance (20) et
c) une sortie (30, 40) qui est reliée aux composants ou groupes constitutifs (1).

15. Dispositif suivant la revendication 14, caractérisé en ce qu'un capteur de température (15) est agencé directement avec les composants ou groupes constitutifs (1) électriques ou électroniques et/ou dans l'environnement des composants ou groupes constitutifs (1) électriques ou électroniques et est relié à un microprocesseur (50), en ce que l'étage de commande de puissance (5 ; 10) qui détermine le courant et/ou la puissance des composants ou groupes constitutifs (1) électriques ou électroniques est relié par des conducteurs de commande et des conducteurs de détecteur (81, 82) au microprocesseur (50) et en ce que le microprocesseur (50) est chargé avec un algorithme avec lequel la valeur de température momentanée est déterminée à partir de la conductibilité thermique et de la masse thermique, des composants ou groupes constitutifs (1) électriques et électroniques, mémorisées dans une mémoire (51, 52) reliée au microprocesseur (50), à partir d'au moins une valeur de départ de température qui a été saisie à l'enclenchement de l'étage de commande de puissance (5 ; 10) et à partir de valeurs momentanées de courant et/ou de puissance qui sont saisies sur ou au moyen de l'étage de commande de puissance (5 ; 10).
